# EUROPÄISCHE PATENTSCHRIFT

(11) **EP 1 543 389 B1**
(45) Veröffentlichungstag und Bekanntmachung des Hinweises auf die Patenterteilung: **18.04.2007**
(21) Anmeldenummer: 03757852.3
(22) Anmeldetag: 16.09.2003
(51) Int. Cl.: G05B 19/042

(54) **VERFAHREN UND RECHNERSYSTEM ZUM BETREIBEN VON MINDESTENS ZWEI MITEINANDER VERBUNDENEN STEUERGERÄTEN**
METHOD AND COMPUTER SYSTEM FOR OPERATING AT LEAST TWO INTERCONNECTED CONTROL DEVICES
PROCEDE ET SYSTEME INFORMATIQUE POUR FAIRE FONCTIONNER AU MOINS DEUX APPAREILS DE COMMANDE INTERCONNECTES

(30) Priorität: 16.09.2002 DE 10243088
(43) Veröffentlichungstag der Anmeldung: 22.06.2005
(73) Patentinhaber: ROBERT BOSCH GMBH, 70442 Stuttgart (DE)
(72) Erfinder: KNOEFLER, Eckehard, 71672 Marbach (DE); LANG, Tobias, 71737 Kirchberg (DE); FINK, Peter, 66687 Wadern-Wedern (DE); LUNT, Martin, 71706 Markgroeningen (DE); ILLG, Bernd, 75031 Eppingen (DE); HAFNER, Arno, A-2371 Hinterbruehl (AT)
(86) Internationale Anmeldenummer: PCT/EP2003/010285
(87) Internationale Veröffentlichungsnummer: WO 2004/027530

(56) Entgegenhaltungen:
- DE-A- 4 408 488
- DE-A- 10 048 780
- DE-A- 19 625 195
- DE-A- 19 957 551

## Beschreibung

### Stand der Technik

Die vorliegende Erfindung betrifft ein Verfahren zum Betreiben von mindestens zwei miteinander verbundenen Steuergeräten. Die Steuergeräte greifen auf Sensorikdaten zu und arbeiten jeweils mindestens ein Computerprogramm zur Steuerung von Betriebsabläufen, insbesondere in einem Fahrzeug, ab. Die Steuergeräte tauschen Synchronisationsinformationen aus. Ein derartiges Verfahren ist zum Beispiel aus DE 44 08 488 A1 bekannt.

Die Erfindung betrifft außerdem ein Rechnersystem umfassend mindestens zwei miteinander verbundene Steuergeräte und ein die Steuergeräte verbindendes Datenübertragungsmedium zum Austausch von Synchronisationsinformationen zwischen den Steuergeräten. Die Steuergeräte greifen auf Sensorikdaten zu und arbeiten jeweils mindestens ein Computerprogramm zur Steuerung von Betriebsabläufen, insbesondere in einem Fahrzeug, ab. Das Datenübertragungsmedium kann auch zur Übertragung von reinen Nutzdaten dienen. Die Übertragung der Daten selbst kann als Synchronisationsinformation herangezogen werden.

Aus dem Kraftfahrzeugbereich ist es bekannt verschiedene Betriebsabläufe in einem Kraftfahrzeug mit Hilfe von Steuergeräten zu steuern und/oder zu regeln. Die zu steuernden bzw. regelnden Betriebsabläufe umfassen beispielsweise den Betrieb einer Brennkraftmaschine (Momentenregelung, Drehzahlregelung, Regelung der Einspritzzeit, etc), einer elektronischen Lenkung (Steerby-Wire), einer elektronischen Bremse (Brake-by-Wire) oder anderer X-by-Wire-Systeme, den Betrieb von sicherheitsrelevanten Funktionen (Fahrstabilitätsregelungen, Antiblockiersystem für die Bremsen, Antischlupfregelung, Aktivlenkung, aktive Dämpferregelung, etc.) sowie Komfortfunktionen (Klimatisierung, elektrische Sitz-, Spiegel- oder Lenkradverstellung, elektrische Fensterheber, Schiebedach, etc.).

Mit zunehmender Komplexität der zu steuernden bzw. regelnden Betriebsabläufe steigt auch die Komplexität der auf den Steuergeräten zur Erfüllung der Steuerungs- bzw. Regelungsfunktion ablaufenden Computerprogramme, was letztendlich auch zu höheren Anforderungen an die Steuergeräte-Hardware führt. Insbesondere müssen zur Erfüllung der Steuerungs- bzw. Regelungsfunktion immer mehr Sensorsignale verarbeitet werden, die dem Steuergerät über Eingänge von Sensoren zur Verfügung gestellt werden. Die Anzahl der Eingänge eines Steuergeräts ist jedoch begrenzt. Um die Steuerung bzw. Regelung von modernen, komplexen Betriebsabläufen zu ermöglichen, müssten deshalb Steuergeräte mit einer größeren Anzahl an Eingängen entwickelt und vertrieben werden. Die Entwicklung neuer Steuergeräte ist jedoch aufwendig und kostenintensiv. Durch neu entwickelte Steuergeräte würde die Vielfalt an verschiedenen Steuergeräten ansteigen und die Stückzahlen der einzelnen Steuergeräte würden geringer, was ebenfalls mit zusätzlichen Kosten für Steuergeräte verbunden wäre.

Insbesondere im Kraftfahrzeugbereich sind jedoch geringe Kosten und damit verbundene standardisierte Bauteile und hohe Stückzahlen von großer Bedeutung für die Wettbewerbsfähigkeit von Bauteilen.

Bereits heutzutage weisen herkömmliche Standard-Steuergeräte Stecker mit weniger Polen auf als für komplexe Betriebsabläufe in Kraftfahrzeugen eigentlich erforderlich wären. Aus den oben beschriebenen Gründen werden auf absehbare Zeit jedoch keine neuen Steuergeräte mit Steckern mit mehr Polen zur Verfügung stehen. Es gilt also, andere Möglichkeiten zu finden, mit Standard-Steuergeräten moderne, komplexe Betriebsabläufe zu steuern und/oder zu regeln.

Aus dem Bereich der Informationstechnik ist es zur Steigerung der Rechnerkapazitäten bekannt, mehrere Rechner (beispielsweise sogenannte PCs, Personal Computer) mittels eines Datenübertragungsmediums zu einem Rechnersystem miteinander zu verknüpfen. Das Datenübertragungsmedium kann eine Funkverbindung, eine optische Verbindung oder eine leitungsgebundene Verbindung sein. Über das Datenübertragungsmedium können Daten und Informationen nach beliebigen Protokollen übertragen werden. Auf den Rechnern solcher verteilter Rechnersysteme laufen verschiedene Computerprogramme mit unterschiedlichen Funktionen ab. Die Abläufe auf den einzelnen Rechnern werden durch eine übergeordnete Einheit oder durch einen Rechner (sogenannten Master) des Rechnersystems koordiniert. Zu diesem Zweck ist es möglich, dass der Master Synchronisationsinformationen über das Datenübertragungsmedium an die anderen Rechner (sogenannte Slaves) übermittelt. Mit den verteilten Rechnersystemen ist es möglich, sehr flexibel eine größere Rechnerkapazität hinsichtlich Rechenleistung und Speicherkapazität zu erzielen. Die größere Anzahl an Eingängen und/ oder Ausgängen des Rechnersystems gegenüber den einzelnen Rechnern spielt dabei keine Rolle. Darüber hinaus werden an einem Rechner des Rechnersystems eingehende Eingangssignale nicht unbedingt auch an anderen Rechnern benötigt und deshalb von dem einen Rechner auch nicht an die übrigen Rechner übertragen. Das ergibt daraus, dass auf den Rechnern verschiedene Computerprogramme ablaufen, die in der Regel unterschiedliche Eingangssignale benötigen.

Ausgehend von dem eingangs beschriebenen Stand der Technik liegt der vorliegenden Erfindung die Aufgabe zugrunde, ein Rechnersystem derart auszugestalten und weiterzubilden, dass mit Hilfe des Rechnersystems auch besonders komplexe Betriebsabläufe, wie sie beispielsweise in einem modernen Kraftfahrzeug auftreten, auf einfache und kostengünstige Weise mit herkömmlichen Steuergeräten steuern und/oder regeln zu können.

Zur Lösung dieser Aufgabe wird ausgehend von dem Verfahren der eingangs genannten Art vorgeschlagen, dass die Steuergeräte das gleiche Computerprogramm zeitsynchron mit einem einstellbaren Zeitversatz abarbeiten.

### Vorteile der Erfindung

Gemäß der vorliegenden Erfindung werden mehrere Steuergeräte mittels eines Datenübertragungsmediums zu einem Rechnersystem verknüpft. Dabei steht weniger eine Steigerung der Rechenkapazität als vielmehr eine Erhöhung der Anzahl der verfügbaren Eingänge zur Übermittlung von Sensorikdaten an die Steuergeräte im Vordergrund. Auf allen Steuergeräten des Rechnersystems werden die gleichen Computerprogramme abgearbeitet, das heißt die Steuergeräte benötigen die gleichen Eingangssignale (Sensorikdaten) um die zur Erfüllung der Steuerungs- und/oder Regelungsfunktion erforderlichen Berechnungen ausführen zu können. Erfindungsgemäß werden aber nicht alle Sensoriksignale über die Eingänge an alle Steuergeräte geführt. Vielmehr wird die Gesamtheit der von den Computerprogrammen benötigten und zur Verfügung stehenden Sensorikdaten auf die einzelnen Steuergeräte des Rechnersystems aufgeteilt. Von diesem Steuergerät werden die Sensorikdaten dann über das Datenübertragungsmedium an die anderen Steuergeräte des Rechnersystems übertragen, damit sie auch dort zur Verfügung stehen.

Die Computerprogramme in den einzelnen Steuergeräten werden synchron, vorzugsweise zeitsynchron, das heißt in streng vorgegebenen Zeitscheiben, abgearbeitet. Allerdings erfordert die Übertragung der Sensorikdaten über das Datenübertragungsmedium Zeit, während der die Sensorikdaten noch nicht in allen Steuergeräten zur Verfügung stehen. Außerdem stehen die Sensorikdaten nicht an allen Steuergeräten zeitgleich zur Verfügung, da die Übertragung der Sensorikdaten unterschiedlich viel Zeit erfordert. Die erforderliche Zeitdauer hängt beispielsweise ab von der Entfernung zwischen sendendem und empfangenden Steuergerät, von der Auslastung des Datenübertragungsmediums oder von Störungen, welche die Datenübertragung beeinträchtigen können. Aus der Forderung nach Datenkonsistenz in den Steuergeräten des Rechnersystems und um der Zeitverzögerung aufgrund der Übertragung der Sensorikdaten Rechnung zu tragen, werden die Steuergeräte des Rechnersystems mit einem zeitlichen Versatz betrieben und die Computerprogramme in den Steuergeräten erst nach Ablauf einer einstellbaren Totzeit nach dem Beginn einer Zeitscheibe abgearbeitet. Die Totzeit wird zum Austausch der Sensorikdaten und eventuell auch anderer Daten und Informationen zwischen den Steuergeräten genutzt. Der Zeitversatz ist entweder absolut, das heißt bezogen auf ein übergeordnetes Zeitraster für alle Steuergeräte des Rechnersystems gleich groß, oder aber es handelt sich um einem relativen Zeitversatz, das heißt es handelt sich um einen Zeitversatz einzelner Steuergeräte relativ zueinander. In der Regel wird es sich um einen relativen Zeitversatz zwischen einem Master-Steuergerät und Slave-Steuergeräten des Rechnersystems sowie zwischen den Slave-Steuergeräten untereinander handeln.

In einem Rechnersystem, bei dem die Steuergeräte über unidirektionale Datenübertragungsmittel miteinander in Verbindung stehen, ist die für die Datenübertragung erforderliche Zeit in etwa doppelt so groß wie bei einem Rechnersystem mit bi-direktionalen Übertragungsmitteln. Am Beispiel eines Rechnersystems mit zwei Steuergeräten soll der Zeitversatz verdeutlicht werden: Beide Steuergeräte empfangen individuelle Sensorikdaten. Anschließend überträgt das erste Steuergerät die von den Sensoren empfangenen Daten an das zweite Steuergerät. Dort stehen nun die von den Sensoren direkt empfangenen Sensorikdaten sowie die von dem ersten Steuergerät empfangen Sensorikdaten zur Verfügung, so dass bereits mit der anstehenden Zeitscheibe und der Abarbeitung des Computerprogramms begonnen werden kann. Nach dem Empfang der Sensorikdaten überträgt das zweite Steuergerät seinerseits die von den Sensoren empfangen Sensorikdaten an das erste Steuergerät, wo nun mit einer Zeitverzögerung relativ zu dem ersten Steuergerät mit der anstehenden Zeitscheibe und der Abarbeitung des Computerprogramms begonnen werden kann. Es versteht sich, dass die von den beiden Steuergeräten berechneten Ergebnisse, beispielsweise Ansteuersignale für Aktoren, zunächst in einem Zwischenspeicher zwischengespeichert werden müssen, um dann gemeinsam ausgelesen zu werden und die Aktoren zeitgleich damit zu beaufschlagen.

Die Erfindung hat darüber hinaus den Vorteil, dass für die Steuerung- und/oder Regelung von komplexen Betriebsabläufen, wie sie beispielsweise in Kraftfahrzeugen in zunehmendem Maße vorliegen, Standard-Steuergeräte mit weniger Eingängen als Sensorikdaten, die zur Verfügung stehen und zur Erfüllung der Steuerungs- bzw. Regelungsfunktion zu verarbeiten sind, eingesetzt werden können. Durch die Verknüpfung der Steuergeräte zu dem Rechnersystem werden für die einzelnen Steuergeräte praktisch weitere zusätzliche Eingänge emuliert. Durch den Einsatz von Standard-Steuergeräten können die Kosten auch für die Steuerung und/oder Regelung auch von komplexen Betriebsabläufen niedrig gehalten werden.

Falls die Sensorikdaten jeweils nur an einem einzigen Steuergerät angelegt werden, kann durch die vorliegende Erfindung auch die Datenkonsistenz gewahrt und sichergestellt werden, dass alle Steuergeräte des Rechnersystems tatsächlich die selben Daten zur Verfügung haben. Würden die analogen Sensorikdaten an mehrere Steuergeräte des Rechnersystems angelegt werden, könnten unterschiedliche Grenzen für die in den Steuergeräten ausgeführten A/D- (Analog-Digital-) Wandlungen dazu führen, dass in den Steuergeräten unterschiedliche digitale Werte für die Sensorikdaten vorliegen, wodurch eine Datenkonsistenz nicht mehr gegeben wäre. Dies kann durch die vorliegende Erfindung verhindert werden, da jedes Sensorikdatum nur von einem einzigen Steuergerät empfangen und dort A/D-gewandelt wird.

Gemäß einer vorteilhaften Weiterbildung der vorliegenden Erfindung wird vorgeschlagen, dass in den Steuergeräten die selben Sensorikdaten zur Verfügung stehen. Die Übertragung der Sensorikdaten zwischen den Steuergeräten erfolgt also derart, dass nach der Übertragung der Sensorikdaten in allen Steuergeräten die selben Sensorikdaten vollständig zur Verfügung stehen. Dabei haben gleiche Sensorikdaten in den verschiedenen Steuergeräten identische Werte.

Die Tatsache, dass alle Steuergeräte die gleichen Computerprogramme abarbeiten und anhand identischer Sensorikdaten die gleichen Berechnungen ausführen und bei funktionsfähigen Steuergeräten beziehungsweise fehlerfrei arbeitenden Computerprogrammen zu den gleichen Ergebnissen kommen müssten, kann für eine Funktionsüberwachung von Hardware und/oder Software eingesetzt werden. Dies kann beispielsweise durch einen Vergleich der ermittelten Ergebnisse oder durch eine Mehrheitsauswahl (n aus m Auswahl, wobei n < m) erfolgen.

Gemäß einer bevorzugten Ausführungsform der Erfindung wird vorgeschlagen, dass die Steuergeräte jeweils nur einen Teil aller Sensorikdaten von Sensoren erhalten und die Steuergeräte Sensorikdaten austauschen, so dass in jedem Steuergerät alle Sensorikdaten zur Verfügung stehen. Mit dieser Ausführungsform werden für die einzelnen Steuergeräte praktisch weitere zusätzliche Eingänge emuliert, so dass trotz des Einsatzes von Standard-Steuergeräten (mit einer beschränkten Anzahl an Eingängen für Sensoriksignale) auch komplexe Betriebsabläufe (unter Verarbeitung von mehr Sensoriksignalen als ein einzelnes Steuergerät Eingänge hat) gesteuert und/oder geregelt werden können. Dadurch können die Kosten auch für die Steuerung und/oder Regelung auch von komplexen Betriebsabläufen niedrig gehalten werden.

Vorteilhafterweise wird der Zeitversatz in Abhängigkeit von der für den Austausch der Sensorikdaten zwischen den Steuergeräten benötigten Zeitdauer eingestellt. Der Zeitversatz, mit dem die Steuergeräte die Computerprogramme abarbeiten, kann vor dem Betrieb des Rechnersystems vorab eingestellt werden. Vorzugsweise wird der Zeitversatz jedoch während des Betriebs der Steuergeräte, also während der Laufzeit des Rechnersystems, eingestellt.

Gemäß einer anderen vorteilhaften Weiterbildung der vorliegenden Erfindung wird vorgeschlagen, dass der Zeitversatz in Abhängigkeit von der für den Austausch der Sensorikdaten zwischen den Steuergeräten benötigten Zeitdauer geregelt wird. Mit Hilfe der Regelung wird sichergestellt, dass der Zeitversatz stets möglichst klein ist, und andererseits aber auch, dass der Zeitversatz nicht zu klein gewählt wird, so dass mit der Abarbeitung der Computerprogramme bereits begonnen wird, obwohl die Sensorikdaten noch nicht in allen Steuergeräten zur Verfügung stehen.

Gemäß einer weiteren Ausführungsform wird vorgeschlagen, dass der Zeitversatz in Abhängigkeit von der für den Austausch der Sensorikdaten zwischen den Steuergeräten benötigten Zeitdauer gedämpft eingestellt bzw. geregelt wird. Die Dämpfung wird beispielsweise realisiert, indem der Zeitversatz beziehungsweise eine Zeitscheibe erst dann verkürzt wird, wenn sich mehrmals hintereinander gezeigt hat, dass der Zeitversatz eigentlich zu groß eingestellt ist und die Datenübertragung bereits deutlich vor Ablauf des Zeitversatzes abgeschlossen war. Nicht jede Veränderung der Übertragungsdauer führt also sofort und unmittelbar zu einer Veränderung des Zeitversatzes. Durch diese Maßnahme wird praktisch der Jitter der Übertragungsdauer gedämpft.

Schließlich wird vorgeschlagen, dass die Synchronisation der Steuergeräte allein durch den Austausch von Nutzdaten über die Datenübertragungsmittel ohne die Übertragung gesonderter Synchronisationsinformationen ausgeführt wird. Hierbei geht es insbesondere um die Low-Level-Synchronisation. Dies ist ein sich selbst optimierender zeitlicher Versatz zwischen Master und Slaves (relativ zum Master). Demgegenüber ist eine High-Level-Synchronisation die Synchronisation des Multiplexers zur Herstellung von Datenkonsistenz in den jeweiligen Rechenrastern (Master-MUX = Slave-MUX). Gemäß des vorgeschlagenen Verfahrens ist es beispielsweise denkbar, dass in den Botschaften, die über die Datenübertragungsmittel übermittelt werden außer den Nutzdaten auch ein Zeitscheibenzähler (TaskCounter) als Schedulinginformation enthalten ist.

Als eine andere Lösung der Aufgabe der vorliegenden Erfindung wird ausgehend von dem Rechnersystem der eingangs genannten Art vorgeschlagen, dass die Steuergeräte das gleiche Computerprogramm zeitsynchron mit einem durch Einstellmittel einstellbaren Zeitversatz abarbeiten.

Gemäß einer vorteilhaften Weiterbildung wird vorgeschlagen, dass eines der Steuergeräte als Master-Steuergerät und die übrigen Steuergeräte als Slave-Steuergeräte definiert sind, wobei das Master-Steuergerät Synchronisationsinformationen an die Slave-Steuergeräte übermittelt. Die Übertragung der Synchronisationsinformationen erfolgt vorzugsweise ebenfalls über die Datenübertragungsmittel. Das Master-Steuergerät gibt ein festes zeitsynchrones Zeitraster vor, nach dem sich die Slave-Steuergeräte richten müssen. Die an sich gleichen Computerprogramme für Master-Steuergerät und Slave-Steuergerät werden lediglich durch ein Steuergeräte-Kodierpin im Kabelbaum auf den Betrieb im Master oder im Slave eingestellt.

Gemäß einer bevorzugten Ausführungsform der Erfindung wird vorgeschlagen, dass sich die Slave-Steuergeräte nach dem Hochfahren des Rechnersystems automatisch auf die Zeitbasis des Master-Steuergeräts aufsynchronisieren. Das bedeutet, dass einige Zeit (z.B. 10 ms) nach dem Hochfahren des Rechnersystems (Neustart z.B. nach dem Einschalten des Systems oder nach dem Auftreten eines Fehlers), nachdem der Synchronisationsprozess abgeschlossen ist, in den Slaves zeitsynchron die gleichen Zeitscheiben gestartet werden wie in dem Master. Allerdings kann in den einzelnen Steuergeräten ein unterschiedlicher Zeitversatz eingestellt sein, so dass die Steuergeräte zu unterschiedlichen Zeitpunkten mit der Abarbeitung der Computerprogramm beginnen können, obwohl sie zeitsynchron arbeiten. Die Übertragung der für die Synchronisation erforderlichen Informationen erfolgt über die Datenübertragungsmittel.

Der zeitsynchronen Abarbeitung der Computerprogramme kann ein winkelsynchrones Zeitraster überlagert sein, durch das beispielsweise sichergestellt werden kann, dass von dem Drehwinkel der Kurbelwelle abhängige Berechnungen unabhängig von dem zeitsynchronen Zeitraster auf jeden Fall rechtzeitig ausgeführt werden können. Das winkelsynchrone Zeitraster kann beispielsweise mittels Interrupt-Befehlen realisiert werden. Botschaften, die im winkelsynchronen Zeitraster über die Datenübertragungsmittel übertragen werden haben eine besonders hohe Priorität.

Es wird vorgeschlagen, dass an die Steuergeräte jeweils nur ein Teil der Sensoren angeschlossen ist, dass die Steuergeräte jeweils nur einen Teil aller Sensorikdaten erhalten und dass die Steuergeräte über das Datenübertragungsmedium Sensorikdaten austauschen, so dass in jedem Steuergerät alle Sensorikdaten zur Verfügung stehen.

Vorzugsweise sind in den einzelnen Steuergeräten Mittel vorgesehen, um mit der zeitsynchronen Abarbeitung der Computerprogramme unter Zugriff auf die Sensorikdaten so lange zu warten, bis in jedem Steuergerät alle aktuellen Sensorikdaten zur Verfügung stehen. Dies müssen nicht unbedingt die zuletzt eingelesenen Sensorikdaten sein, sonderen können auch die Daten einer vorangegangenen Zeitscheibe sein. Wichtig ist jedoch, dass alle zur Verfügung stehenden Sensorikdaten gleich alt sind, das heißt aus der gleichen Zeitscheibe stammen. Wenn die Daten aus einer vergangenen Zeitscheibe stammen, ist die Datenverarbeitung durch die Computerprogramme etwas zeitverzögert. Dies führt in der Praxis jedoch zu keinerlei Nachteilen, da es sich in der Regel nur um wenige Millisekunden Verzögerung handelt. Die Stabilität von Regelungen ist trotz der geringen Zeitverzögerung gewährleistet.

Gemäß einer anderen vorteilhaften Weiterbildung der Erfindung wird vorgeschlagen, dass jedes Steuergerät unterteilt ist in eine Hardware-Ebene, eine Hardwaretreiber-Ebene und eine Anwendungssoftware-Ebene, wobei das Computerprogramm zur Steuerung von Betriebsabläufen in der Anwendungssoftware-Ebene abläuft und die Übertragung der Sensorikdaten unabhängig von der Anwendungssoftware-Ebene in der Hardwaretreiber-Ebene abläuft. Die vorliegende Erfindung betrifft also im wesentlichen die Hardwaretreiber-Ebene, in der das Senden und Empfangen über die Datenübertragungsmittel sowie das Zwischenspeichern der Sensorikdaten in den Steuergeräten implementiert ist. Die Anwendungssoftware greift nur auf die Zwischengespeicherten Sensorikdaten zu, unabhängig davon, ob es sich um unmittelbar von Sensoren empfangene Sensorikdaten oder um mittelbar von anderen Steuergeräten über die Datenübertragungsmittel empfangene Sensorikdaten handelt. Auch das Einstellen bzw. Regeln des Zeitversatzes ist in der Hardwaretreiber-Ebene implementiert.

Im Gegensatz dazu war es bei bisherigen Mehrrechner-Konzepten üblich, die einzelnen Steuergeräte des Rechnersystems auf der Funktionsebene miteinander zu vernetzen, das heißt die Master Slave Datenbus Kopplung war auf der Funktionsebene. Das führte dazu, dass die Datenbus-Auslegung stark abhängig von der Basisfunktionalität des Systems war. Bei einer Änderung der Anwendungssoftware musste das Datenbus-Layout immer angepasst werden. Das kann mit der vorliegenden Erfindung verhindert werden. Selbst bei einer Änderung der Basisfunktionalität kann ein stabiles Datenbus-Layout sichergestellt werden.

Gemäß einer weiteren bevorzugten Ausführungsform wird vorgeschlagen, dass die Sensoren den Steuergeräten derart zugeordnet und an den ihnen jeweils zugeordneten Steuergeräten angeschlossen sind, dass sich während des Betriebs des Rechnersystems auf dem Datenübertragungsmedium in beide Übertragungsrichtungen eine im zeitlichen Mittel im wesentlichen gleichmäßige Auslastung ergibt. Natürlich wird dieses Merkmal mit zunehmender Anzahl an Steuergeräten schwieriger zu realisieren sein. Bei der Auslegung des Rechnersystems wird jedoch darauf geachtet, dass die Steuergeräte in etwa gleich oft Sensorikdaten senden wie sie Sensorikdaten empfangen. Wird dies nicht beachtet, kann dies zu längeren Übertragungszeiten für die Sensorikdaten und zu einem längeren Zeitverzug führen als eigentlich erforderlich wäre.

Die Datenübertragung über das Datenübertragungsmedium kann beliebigen Protokollen erfolgen. Denkbar ist beispielsweise der Einsatz des FireWire-, des ByteFlight-, des FlexRay-, des TTP (Time Triggered Protocol) oder des LIN (Local Interconnect Network)-Protokolls. Vorteilhafterweise erfolgt die Datenübertragung jedoch über das Datenübertragungsmedium nach dem CAN (Controller Area Network)-Protokoll.

### Zeichnungen

Weitere Merkmale, Anwendungsmöglichkeiten und Vorteile der Erfindung ergeben sich aus der nachfolgenden Beschreibung von Ausführungsbeispielen der Erfindung, die in der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung. Es zeigen:
- Figur 1: ein erfindungsgemäßes Rechnersystem umfassend zwei über einen Datenbus miteinander vernetzte Steuergeräte gemäß einer bevorzugten Ausführungsform;
- Figur 2: verschiedene gedankliche Steuergeräte-Ebenen eines Steuergeräts gemäß der vorliegenden Erfindung;
- Figur 3: ein Systembild eines erfindungsgemäßen Rechnersystems mit der eingesetzten Sensorik und Aktorik gemäß einer ersten bevorzugten Ausführungsform;
- Figur 4: einen Zustandsautomat zur Synchronisierung der Zeitscheiben in einem Slave-Steuergerät des erfindungsgemäßen Rechnersystems;
- Figur 5: ein erfindungsgemäßes Rechnersystem zur Verdeutlichung der Botschafts- und Signalspeicherung;
- Figur 6: ein Systembild eines erfindungsgemäßen Rechnersystems mit der eingesetzten Sensorik und Aktorik gemäß einer zweiten bevorzugten Ausführungsform;
- Figur 7: Diagramm mit der Aufteilung und Abarbeitung der Zeitscheiben in einem erfindungsgemäßen Rechnersystem; und
- Figur 8: Signalverläufe in einem erfindungsgemäßen Rechnersystem zur Verdeutlichung des Datenaustauschs zwischen Master und Slave des Rechnersystems.

### Beschreibung der Ausführungsbeispiele

Als ein bevorzugtes Ausführungsbeispiel der vorliegenden Erfindung wird nachfolgend auf die Steuerung einer relativ komplexen Brennkraftmaschine eines Kraftfahrzeugs mit zehn Zylindern Bezug genommen. Die Erfindung lässt sich jedoch auch zur Steuerung und/oder Regelung beliebig anderer komplexer Betriebsabläufe, vorzugsweise in einem Kraftfahrzeug, einsetzen.

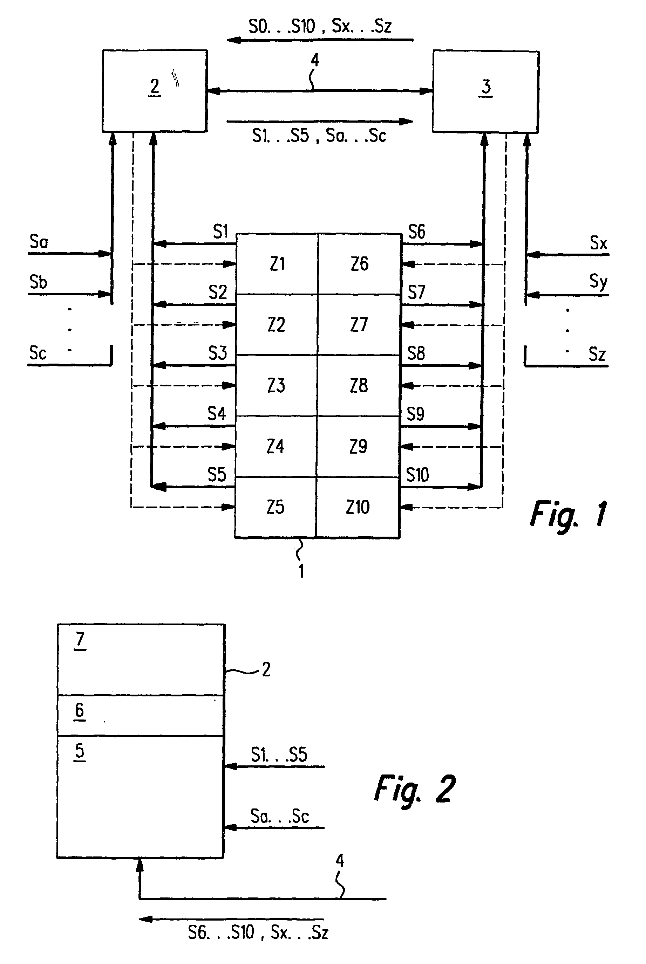

Wie in Figur 1 dargestellt, wird zur Steuerung und/oder Regelung der komplexen Betriebsabläufe in der Brennkraftmaschine 1 ein Mehrrechnersystem umfassend zwei Steuergeräte 2, 3, die mittels eines als Bussystem 4 ausgebildeten Datenübertragungsmittels miteinander in Verbindung stehen, eingesetzt. Die Datenübertragung über das Bussystem 4 erfolgt nach dem CAN (Controller Area Network)-Protokoll.

Eines der Steuergeräte 2 ist als Master-Steuergerät und das andere Steuergerät 3 als Slave-Steuergerät definiert. Das Master-Steuergerät 2 übermittelt Synchronisationsinformationen an das Slave-Steuergerät. Die Übertragung der Synchronisationsinformationen erfolgt in Form von CAN-Botschaften über das Bussystem 4. Das Master-Steuergerät 2 gibt ein festes zeitsynchrones Zeitraster vor, nach dem sich das Slave-Steuergerät 3 richten muss.

Auf beiden Steuergeräten 2, 3 laufen die gleichen Computerprogramme zur Erfüllung der bestimmungsgemäßen Steuerungs- und/oder Regelungsfunktionen ab. Die Computerprogramme der beiden Steuergeräte 2, 3 verarbeiten im wesentlichen die selben Eingangssignale, die im wesentlichen aus Sensorikdaten S1 bis S10 sowie Sa bis Sc und Sx bis Sz bestehen. Die Sensorikdaten S1 bis S10 stammen von Sensoren, die in den zehn Zylindern Z1 bis Z10 der Brennkraftmaschine 1 angeordnet sind. Die Sensorikdaten Sa bis Sc sowie Sx bis Sz stammen von anderen Sensoren, die in oder an der Brennkraftmaschine 1 oder an anderen Stellen in dem Kraftfahrzeug angeordnet sein können.

Da jedes Steuergerät 2, 3 nur eine begrenzte Anzahl an Eingängen zum Anschluss von Sensoren aufweist, wird bei dem erfindungsgemäßen Rechnersystem ein Teil der Sensoren an das eine Steuergerät 2 und der andere Teil der Sensoren an das andere Steuergerät 3 angeschlossen. Damit beiden Steuergeräten 2, 3 die selben Sensorikdaten S1 bis S10, Sa bis Sc, Sx bis Sz zur Abarbeitung der Computerprogramme zur Verfügung stehen, werden die eingegangenen Sensorikdaten zwischen den Steuergeräten 2, 3 über das Bussystem 4 zwischen den Steuergeräten 2, 3 ausgetauscht.

Wie in Figur 2 dargestellt, können die Steuergeräte 2, 3 gedanklich unterteilt werden in eine Hardware-Ebene 5, eine Hardwaretreiber-Ebene 6 und eine Anwendungssoftware-Ebene 7. In der Hardware-Ebene 5 sind die Steuergeräte 2, 3 an das Bussystem 4 angeschlossen. Die Computerprogramme zur Steuerung der Brennkraftmaschine 1 laufen in der Anwendungssoftware-Ebene 7 der Steuergeräte 2, 3 ab. Die Übertragung der Sensorikdaten S1 bis S10, Sa bis Sc, Sx bis Sz über den Datenbus 4 läuft unabhängig von der Anwendungssoftware-Ebene 7 ab und wird in der Hardwaretreiber-Ebene 6 koordiniert. Die Computerprogramme merken also nicht, ob die von ihnen verarbeiteten Sensorikdaten S1 bis S10, Sa bis Sc, Sx bis Sz unmittelbar von einem Sensor oder mittelbar über das Bussystem 4 von einem anderen Steuergerät 2, 3 empfangen wurden. Mit anderen Worten, werden in den Steuergeräten 2, 3 also erfindungsgemäß zusätzliche Eingänge für Sensorikdaten emuliert, die an den Steuergeräten 2, 3 hardwaremäßig nicht vorhanden sind. Bei dem in Figur 2 beispielhaft dargestellten Steuergerät 2 sind Eingänge für die Sensorikdaten S1 bis S5 und Sa bis Sc hardwaremäßig vorhanden, wohingegen die Sensorikdaten S6 bis S10 und Sx bis Sz über den Datenbus 4 empfangen werden, das heißt die Eingänge für diese Sensorikdaten S6 bis S10 und Sx bis Sz emuliert werden. Dadurch kann auch für Steuerungs- und/oder Regelungsaufgaben von sehr komplexen Betriebsabläufen, bei denen eine Vielzahl von Sensorikdaten verarbeitet werden müssen, Rechnersystem umfassend mehrere einfach aufgebaute und kostengünstige Standard-Steuergeräte, die über Datenübertragungsmittel miteinander vernetzt sind, eingesetzt werden. Außerdem kann die gleiche Steuergeräte-Hardware als Master- und als Slave-Steuergerät eingesetzt werden.

Wenn die verschiedenen Sensorikdaten S1 bis S10, Sa bis Sc, Sx bis Sz jeweils nur einmal an eines der Steuergeräte 2, 3 geführt werden, hat das erfindungsgemäße Konzept einen weiteren Vorteil. Dieser besteht darin, dass die Datenkonsistenz gewahrt und sichergestellt werden kann, dass alle Steuergeräte 2, 3 des Rechnersystems tatsächlich die selben Daten zur Verfügung haben. Würden die analogen Sensorikdaten S1 bis S10, Sa bis Sc, Sx bis Sz an mehrere Steuergeräte 2, 3 des Rechnersystems parallel angelegt werden, könnten unterschiedliche Grenzen für die in den Steuergeräten 2, 3 ausgeführten A/D- (Analog-Digital-) Wandlungen dazu führen, dass in den Steuergeräten 2, 3 unterschiedliche digitale Werte für die Sensorikdaten vorliegen, wodurch eine Datenkonsistenz nicht mehr gegeben wäre.

Der Austausch der Sensorikdaten S1 bis S10, Sa bis Sc, Sx bis Sz unter den Steuergeräten 2, 3 über den Datenbus 4 benötigt Zeit. Um sicherzustellen, dass in den Steuergeräten zu den jeweiligen Zeitscheiben stets alle benötigten aktuellen Sensorikdaten zur Verfügung stehen, erfolgt der Start der Zeitscheiben in den Steuergeräten 2, 3 mit einem einstellbaren Zeitversatz. Der Zeitversatz, mit dem eine Zeitscheibe in einem Steuergerät 2, 3 gestartet wird, hängt von der benötigten Übertragungsdauer der Sensorikdaten über das Bussystem 4 ab. Der Start der Zeitscheiben in einem Steuergerät 3 weist einen Zeitversatz relativ zum Start der Zeitscheiben in dem anderen Steuergerät 2 auf.

In den Steuergeräten 2, 3 laufen die gleichen Computerprogramme zur Erfüllung der bestimmungsgemäßen Steuerungs- bzw. Regelungsfunktionen ab, das heißt es werden die gleichen Eingangssignale (zum Beispiel von den Sensoren) verarbeitet und die gleichen Ausgangssignale (zum Beispiel zur Ansteuerung von Aktoren) ermittelt. Bei dem in Figur 1 dargestellten Ausführungsbeispiel werden von dem Steuergerät 2 jedoch nur die für Aktoren der Zylinder Z1 bis Z5 bestimmten Ausgangssignale an Endstufen für diese Aktoren geleitet (gestrichelte Linie), wohingegen die Ausgangssignale für die Zylinder Z6 bis Z10 ungenutzt bleiben. Ebenso werden von dem Steuergerät 3 nur die für Aktoren der Zylinder Z6 bis Z10 bestimmten Ausgangssignale an Endstufen für diese Aktoren geleitet (gestrichelte Linie), wohingegen die Ausgangssignale für die Zylinder Z1 bis Z5 ungenutzt bleiben.

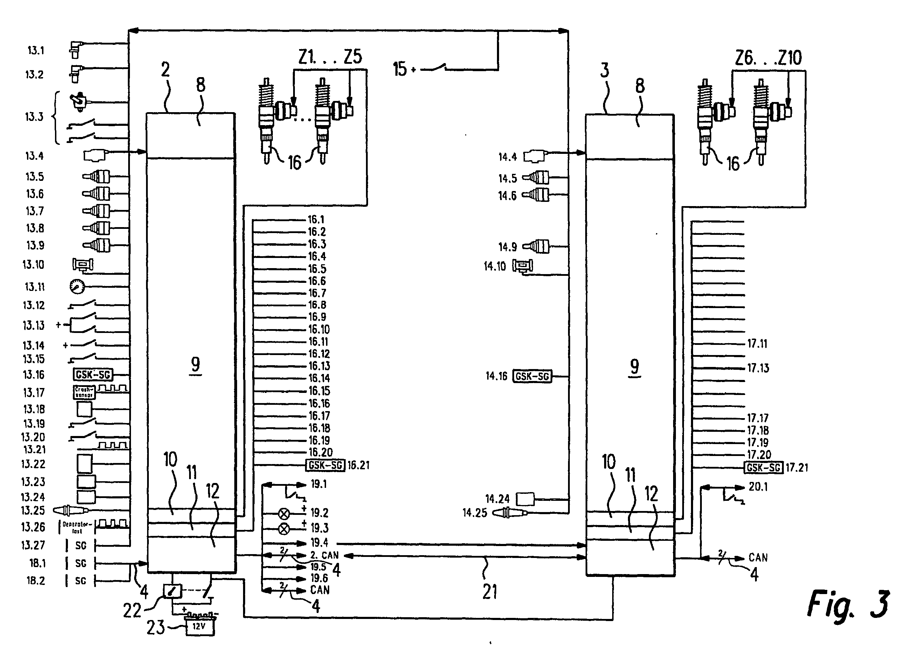

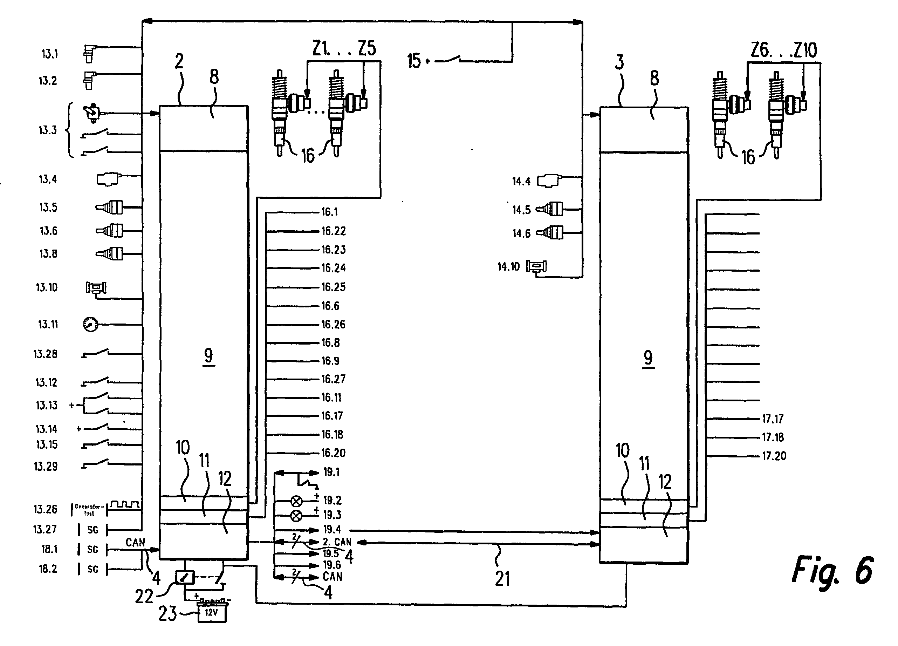

Das erfindungsgemäße Master Slave System für das Motor Steuergerät Konzept ist ausgelegt für mehrere Steuergeräte 2, 3, vernetzt über einen CAN Bus 4. Figur 3 zeigt ein Systembild mit der eingesetzten Sensorik und Aktorik, die identisch ist mit der bei einem zweiten Konzept (vergleiche Figur 6) eingesetzten Sensorik und Aktorik. Bei dem in Figur 3 dargestellten ersten erfindungsgemäßen Konzept sind Master-Steuergerät 2 und Slave-Steuergerät 3 baugleich ausgebildet. Die eingesetzte Software ist bei beiden Steuergeräten 2, 3 identisch. Außerdem sind beide Steuergeräte 2, 3 funktional nahezu identisch. Sie erfüllen beide die nachfolgend beispielhaft aufgeführten Funktionen:
Bezugszeichen 8:
   - Signaleingänge
   - Sensorauswertung
   - Signalverarbeitung
   - Atmosphärendruckfühler (ADF), nur Master-Steuergerät 2
Bezugszeichen 9:
   - Startmoment
   - Leerlaufregelung
   - Momentenregelung und -begrenzung
   - Externer Momenteneingriff
   - Laufruheregler
   - Aktiver Ruckeldämpfer
   - Förderbeginn- und Förderdauerberechnung
   - Förderbeginnkorrektur (Begin of Injection Period (BIP), Einspritzbeginn)
   - Ladedruckregelung
   - Abgasrückführung und Drosselklappenansteuerung
   - Abgasnachbehandlung
   - Ansteuerung Kraftstoffkühlung
   - Fahrgeschwindigkeitsregler (FGR) oder Geschwindigkeitsregelanlage (GRA)
   - Motorlagersteuerung
   - Klimakompressoransteuerung
   - Glühzeitsteuerung
   - Wegfahrsperre
   - Ersatzfunktionen
   - Abgleich
   - Nachlauf
Bezugszeichen 10:
   - Magnetventilendstufen
Bezugszeichen 11:
   - Leistungsendstufen
Bezugszeichen 12:
   - Diagnose
   - Serielle Schnittstelle (nur Master-Steuergerät 2)
   - Winkeluhr-Kopplung (nur Slave-Steuergerät 3)
   - CAN-Kommunikation

Die nachfolgend beispielhaft aufgeführten Sensoren liefern Sensorikdaten an das Master-Steuergerät 2:
- 13.1: Motordrehzahl (KW)
- 13.2: Motordrehzahl (NW, Nockenwelle) und Zylindererkennung
- 13.3: Pedalwertgeber (PWG) mit Leergasschalter und Kick-Down (optional 2. PWG)
- 13.4: Ladedruck
- 13.5: Lufttemperatur
- 13.6: Kraftstofftemperatur
- 13.7: Öltemperatur
- 13.8: Wassertemperatur 1/2
- 13.9: Abgastemperatur 1/2
- 13.10: Luftmasse
- 13.11: Fahrgeschwindigkeit
- 13.12: GRA-Bedienteil (Tempomat-Bedienteil)
- 13.13: Bremse (2)
- 13.14: Kupplung
- 13.15: Klemme 50
- 13.16: Glühstiftkerzen (GSK) Rückmeldung
- 13.17: Crashsensor
- 13.18: Tankleerschalter
- 13.19: Tankdeckel offen
- 13.20: Anforderung Zuheizer
- 13.21: Zuheizer Verbrauchssignal
- 13.22: Heizungsanforderung
- 13.23: Raps-Methyl-Sensor
- 13.24: Partikelfilter Differenzdruck
- 13.25: Lambdasonde
- 13.26: Generatorlast
- 13.27: Klimasteuerung

Die nachfolgend beispielhaft aufgeführten Sensoren liefern Sensorikdaten an das Slave-Steuergerät 3:
- 14.4: Ladedruck
- 14.5: Lufttemperatur
- 14.6: Kraftstofftemperatur
- 14.9: Abgastemperatur 1/2
- 14.10: Luftmasse
- 14.16: Glühstiftkerzen (GSK) Rückmeldung
- 14.24: Partikelfilter Differenzdruck
- 14.25: Lambdasonde

Die Sensorikdaten 15 (Klemme 15) liegen an beiden Steuergeräten 2, 3 an.

Über die Magnetventilendstufen 10 steuern die Steuergeräte 2, 3 den Förderbeginn und/oder die Förderdauer der Kraftstoffeinspritzventile 16. Diese sind beispielsweise als Pumpe-Düse-Einheiten (PDE) oder als Common-Rail-Injektoren ausgebildet. Wie bereits oben erwähnt, steuert das Steuergerät 2 die Kraftstoffeinspritzventile 16 der Zylinder Z1 bis Z5 an, wohingegen das Steuergerät 3 die der Zylinder Z6 bis Z10 ansteuert. Das hat den Vorteil, dass pro Steuergerät 2, 3 nicht alle sondern lediglich fünf Magnetventilendstufen betrieben werden müssen. Dadurch kann die durch die Endstufen erzeugte Abwärme in den Steuergeräten 2, 3 reduziert werden.

Über die Leistungsendstufen 11 steuert das Steuergerät 2 Aktoren für die nachfolgend beispielhaft aufgeführten Funktionen an:
- 16.1: Motorlager
- 16.2: Tankabschaltventil
- 16.3: Startersteuerung ½
- 16.4: Generatorabschaltung
- 16.5: Klimaanlagenanforderung
- 16.6: Kühlerventilator
- 16.7: Kühlerthermostatsteuerung
- 16.8: Kraftstoffkühlung
- 16.9: Kraftstoffpumpenrelais
- 16.10: Lüftersteuerung
- 16.11: Glührelais
- 16.12: Elektrische Kühlwasserpumpe
- 16.13: Katalysator-Heizung
- 16.14: Additiv Dosierpumpe
- 16.15: Zusatzheizrelais 1/2
- 16.16: Zuheizer Brennersteuerung
- 16.17: Drosselklappensteller
- 16.18: Abgasrückführsteller
- 16.19: Abgasrückführkühlung
- 16.20: Ladedrucksteller
- 16.21: Glühstiftkerzen Steuergerät

Über die Leistungsendstufen 11 steuert das Steuergerät 3 Aktoren für die nachfolgend beispielhaft aufgeführten Funktionen an:
- 17.11: Glührelais
- 17.13: Katalysator-Heizung
- 17.17: Drosselklappensteller
- 17.18: Abgasrückführsteller
- 17.19: Abgasrückführkühlung
- 17.20: Ladedrucksteller
- 17.21: Glühstiftkerzen Steuergerät

Über einen CAN-Datenbus 4 werden dem Master-Steuergerät 2 Daten von einem Steuergerät (SG) einer Antriebs-SchlupfRegelung (ASR)/ Motor Schlepp-Regelung (MSR) 18.1 sowie von einem Steuergerät eines Getriebes 18.2 zugeführt.

Von dem Steuergerät 2 werden des weiteren an die nachfolgend beispielhaft angeführten Einheiten Signale ausgegeben:
- 19.1: Diagnoseschnittstelle (ISO K) mit Schaltelement zum Auslösen einer Diagnoseanforderung
- 19.2: Systemlampe
- 19.3: MIL-Lampe (Malfunction Indication Lamp, Fehlerlampe für Onboard Diagnosis)
- 19.4: Drehzahlkopplung
- 19.5: Drehzahlanzeige (Drehzahlsignal)
- 19.6: Verbrauchsanzeige (Verbrauchssignal)

Bei dem Steuergerät 3 ist eine entsprechende Diagnoseschnittstelle (ISO K) 20.1 mit Schaltelement zum Auslösen einer Diagnoseanforderung vorgesehen.

Des weiteren sind Datenbusse 4 für einen Datenaustausch 21 zwischen den Steuergeräten 2, 3 vorgesehen. Der Datenaustausch beschränkt sich auf Sensorsignalrohwerte, Digitalsignale, Fehlerstati, Reglerwerte und Ansteuerstati. Es werden ausgetauscht insbesondere:
- digitale Sensorikdaten (nach der A/D-Wandlung der von den Sensoren 13, 14 an die Steuergeräte 2, 3 herangeführten analogen Sensorikdaten)
- Reglerabgleich-Informationen
- Ansteuerstatus-Informationen
- Programmsynchronisationsinformationen.

Ein Hauptrelais des Kraftfahrzeugs ist in Figur 3 mit dem Bezugszeichen 22 bezeichnet, die Kraftfahrzeug-Batterie mit 23.

Die Sensorik 13, 14 ist größtenteils am Master-Steuergerät 2 angeschlossen. Durch das komplett zweiflutige Luft- und Abgassystem der Brennkraftmaschine 1 sind die Signale wie Luftmasse 13.10, 14.10, Lufttemperatur 13.5, 14.5, Ladedruck 13.4, 14.4, Abgastemperatur 13.9, 14.9, usw. an dem Master 2 und dem Slave 3 getrennt vorhanden. Gleichzeitig werden aber auch diese doppelten Signale untereinander konsistent ausgetauscht, so dass jedes Steuergerät auch Zugriff auf die Eingangsdaten des jeweils anderen Luftstrangs hat. Beim Datenaustausch der doppelten Sensorik wurde außerdem ein Mechanismus entwickelt, mit dem ein Steuergerät 2, 3 auf zum Beispiel die Luftmasse zugreift und automatisch die von dem unmittelbar an dem Steuergerät 2, 3 angeschlossenen Sensor 13.10, 14.10 gemessene Luftmasse erhält. Über den Zugriff auf die "externe Luftmasse" wird automatisch auf die Luftmasse des anderen Steuergeräts 2, 3 zugegriffen, die das Steuergerät mittelbar über den Datenbus 4 erhält. So können synchron Ersatzreaktionen bei Fehlern eingeleitet werden. Manche Sensoren 13, 14, zum Beispiel Glühstiftkerzen 13.16, 14.16, werden nur lokal in jedem Steuergerät 2, 3 erfasst und nicht ausgetauscht, da sie für das Gesamtsystem von untergeordneter Bedeutung sind.

Die zeitsynchronen Berechnungen werden in dem Master-Steuergerät 2 gestartet. Dieses erfasst die entsprechenden Sensorikdaten und überträgt einen Teil dieser Sensorikrohdaten an das Slave-Steuergerät 3, verwendet für die anstehende Berechnung aus Datenkonsistenzgründen aber die Sensorikdaten der vorangegangenen bereits abgeglichenen Zeitscheibe. Wegen der großen Datenmenge können nicht alle Signale auf einmal übertragen werden. Die Übertragung erfolgt paketweise (beispielsweise immer fünf oder sechs CAN-Botschaften) alle 10 ms vom Master 2 zum Slave 3 und umgekehrt. Selbstverständlich kann auch ein beliebig anderes Zeitraster verwendet werden.

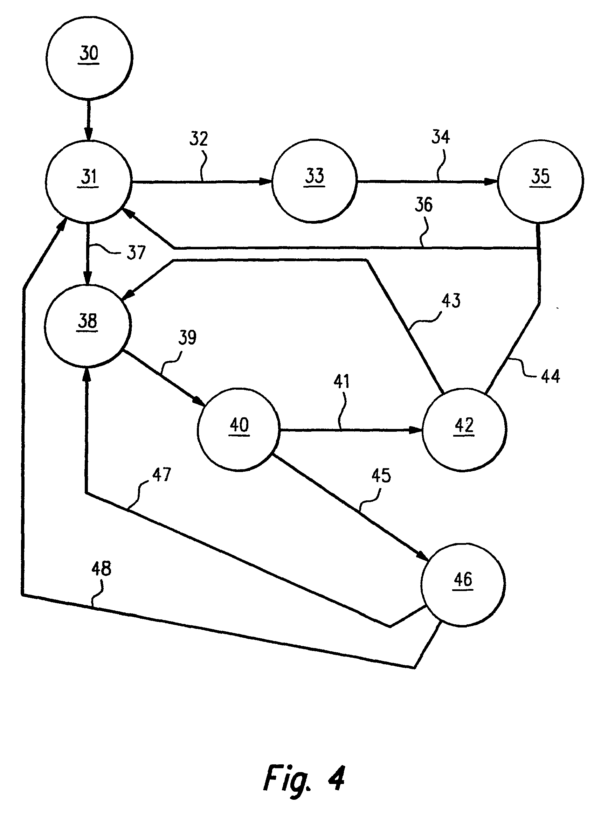

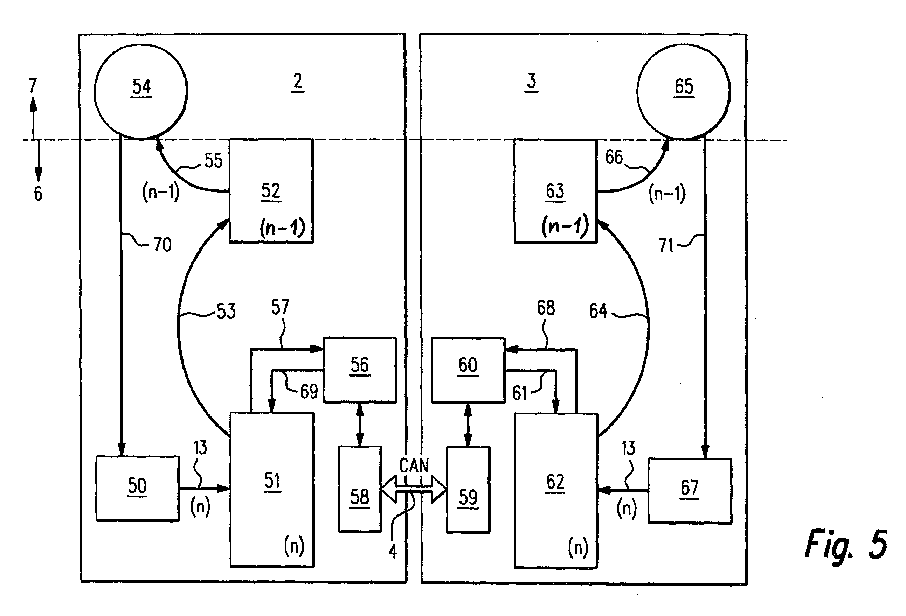

Ist ein Datenpaket komplett an den Slave 3 übertragen worden, erkennt dies ein Zustandsautomat und startet die gleiche Zeitscheibe wie im Master 2. Der Zustandsautomat dient zur Synchronisierung der Zeitscheiben im Slave 3 und ist in Figur 4 dargestellt. Die Informationen, welche Zeitscheibe gerade gerechnet wird, ist in jedem CAN-Übertragungspaket enthalten. Die empfangenen Daten werden in einem Zwischenspeicher, dem sogenannten ShadowBuffer (vergleiche Bezugszeichen 51 in Figur 5), zwischengespeichert, die aktuelle Zeitscheibe rechnet mit den identischen Daten wie der Master 2, gespeichert in einem sogenannten RamMirror. Grund für die-Zwischenspeicherung ist Datenkonsistenz innerhalb der Zeitscheiben und die relativ große Datenmenge einer Zeitscheibe. Ist eine Zeitscheibe komplett zu Ende gerechnet, muss der Datenaustausch für die nächste Zeitscheibe abgeschlossen sein, bevor diese gestartet wird. Durch diesen Zeitaufwand für den konsistenten Datenaustausch wird eine Totzeit in dem System eingebaut, die messbar ist. Die Signale sind alle um eine Zeitscheibe verzögert, aber absolut identisch im System.

Bei dem in Figur 4 dargestellten Zustandsautomat zur Synchronisierung der Zeitscheiben im Slave 3 wird nach einem Neustart des Rechnersystems (zum Beispiel nach dem Einschalten oder nach einem Fehler) in einem ersten Zustand 30 (Initialisierung) begonnen. Von dort wird in einen Zustand 31 (Periode abgelaufen, warte auf CAN) übergegangen. Wenn die Wartezeit abgelaufen ist ohne dass Daten von dem Datenbus 4 empfangen wurden (Bedingung 32), wird in einen Zustand 33 (Zwangsscheduling) übergegangen. Dann wird in einem Schritt 34 eine Sperrzeit definiert, und in einen Zustand 35 übergegangen, wo keine Daten vom Datenbus 4 gelesen werden. Der Schritt 34 kann beispielsweise realisiert werden durch:

```
         Entprellzähler --
         if Entprellzähler = 0
           {Periode = verlängert
            Entprellzähler nachladen
         } else
           {Periode = normal}
         Sperrzeit = Periode - Wartezeit
```

Alternativ kann die Sperrzeit auch als Summe aus Periode und Wartezeit berechnet werden. Während der Sperrzeit werden keine Daten vom Datenbus 4 empfangen. Schließlich wird wieder in den Zustand 31 (Periode abgelaufen, warte auf CAN) übergegangen, sobald die Sperrzeit abgelaufen ist (Bedingung 36). Durch die Sperrzeit wird gewissermaßen ein blindes Fenster definiert und durch Verkürzen oder Verlängern der Zeitscheiben so lange durch das Zeitraster geschoben, bis das Zeitraster des Slaves 3 mit dem Zeitraster des Masters 2 übereinstimmt und in Master 2 und Slave 3 die gleichen Zeitscheiben zeitsynchron (allerdings durchaus mit dem oben angesprochenen Zeitversatz) abgearbeitet werden. Die Sperrzeit (das blinde Fenster) dient der Verbesserung der Störsicherheit der Synchronisierung der Steuergeräte 2, 3. Während der Sperrzeit dürfen keine Daten über den Bus 4 kommen. Damit wird ein unnötiges Verkürzen der Zeitscheibe verhindert.

Wenn in dem Zustand 31 während der Wartezeit Daten von dem Datenbus 4 empfangen werden (Bedingung 37, CAN-Object, newData), wird in einen Zustand 38 (Schedule starten) übergegangen. Von dort kann in einem Schritt 39 in einen Zustand 40 (Schedule gesperrt) übergegangen werden. Der Schritt 39 kann beispielsweise realisiert werden durch:

```
         if Entprellzäher = 0
           {Periode = verkürzt
            Sperrzeit = Sperrzeit für verkürzte Periode
            Entprellzähler = Entprellzähler für verkürzen
         } else
           {Periode = normal
            Sperrzeit = Sperrzeit für normale Periode}
```

In dem Zustand 40 wird gewissermaßen ein blindes Fenster definiert, falls ein Fehler auftritt. Es wird eine Entscheidung getroffen, ob die Periode verkürzt wird. Falls eine Bedingung 41 (Sperrzeit abgelaufen, CAN aktuell und Entprellzähler --) erfüllt ist, wird in eine Zustand 42 (CAN aktuell, warten auf Perioden Ende) übergegangen. In dem Zustand 42 beobachtet der Slave 3 den Datenbus 4 aber scheduled nicht, sondern merkt sich, falls eine CAN-Botschaft früher (das heißt vor Ablauf der Zeitverzögerung) vollständig empfangen wurde. Falls die Periode abgelaufen ist (Bedingung 43), geht der Slave 3 wieder in den Zustand 38 über. Falls in dem Zustand 42 noch nicht alle Botschaften empfangen wurden, da die Periode zu weit verkürzt wurde (Bedingung 44, Periode abgelaufen, CAN alt, Entprellzähler = Entprellzähler für Verlängern), wird wieder in den Zustand 31 gewechselt. Falls eine Bedingung 45 (Sperrzeit abgelaufen, CAN alt und Entprellzähler = Entprellzähler für Verkürzen) erfüllt ist, wechselt der Slave 3 in einen Zustand 46 (Warten auf Periode Ende), wo die Periode verkürzt wird. Falls alle Botschaften empfangen wurden (Bedingung 47, Periode abgelaufen, CAN aktuell, Entprellzähler = Entprellzähler für Verkürzen), geht der Slave 3 wieder in den Zustand 38 über. Falls noch nicht alle Botschaften empfangen wurden, da die Periode zu weit verkürzt wurde (Bedingung 48, Periode abgelaufen, CAN alt, Entprellzähler = Entprellzähler für Verlängern), wird wieder in den Zustand 31 gewechselt.

Zusammenfassend kann zu dem Zustandsautomat aus Figur 4 also gesagt werden: Das Master-Steuergerät 2 gibt das Zeitraster vor, das heißt es sagt, die wievielte Zeitscheibe von dem Slave-Steuergerät 3 gestartet werden soll. Falls die Nummern der zur Abarbeitung anstehenden Zeitscheiben von Master 2 und Slave 3 unterschiedlich sind, werden die Zeitscheiben des Slave 3 mehr oder weniger verkürzt oder verlängert und das Rechnersystem mit unterschiedlich langen Zeitscheiben betrieben, bis die Nummern der Zeitscheiben von Master 2 und Slave 3 identisch sind.

Zum Datenabgleich während der Initialisierung zwischen Master 2 und Slave 3 wird eine besondere Strategie eingesetzt. Während der Initialisierung werden Analogwerte gemessen. Mit diesen Werten wird ein PT1-Filter initialisiert. Bei einem Master-Slave-Rechensystem ergibt sich das Problem, dass die Komponententreiber (Component Drivers, CD) auf in dem Schreib-Lese-Speicher (RAM Mirror) gepufferte Werte zugreifen. Dieser Schreib-Lese-Speicher enthält während der Initialisierung noch keine gültigen Werte. Somit wird das PT1-Filter falsch initialisiert.

Deshalb wird zur Signalerfassung während der Initialisierung folgende Strategie eingesetzt:
a) Während der Initialisierungs-Routine wird ein Requestbit im Statusregister für alle in DataSets enthaltenen Signale gesetzt. Somit erfolgt auf jeden Fall ein Hardwarezugriff beim ersten Aufruf des Komponententreibers. Dieser erste gültige Signalwert wird gemäss dem Rechensystem in dem Zwischenspeicher (ShadowBuffer) gespeichert. Der Komponententreiber benutzt den nicht korrekten Wert aus dem Schreib-Lese-Speicher.
b) Abgleich der Signale der Initialisierungstask (Bezugszeichen 30 in Figur 3): Die Task 30 hat einen TaskCounter 10. Sie wird nur bei Steuergeräte-Reset ausgeführt. Master 2 und Slave 3 senden die CAN Daten der Initialisierungstask 30 in einem Signal-Initialisierungs-Prozess. Dieser Prozess wird am Ende der Initialisierung ausgeführt, um sicherzustellen, dass alle Hardware-Zugriffe der Initialisierung ausgeführt wurden, der Zwischenspeicher also mit gültigen Werten gefüllt ist. Nach dem Versenden der Daten der Initialisierungstask 30 warten Master 2 und Slave 3 auf den Empfang des Datenpaketes. Die maximale Wartezeit kann über ein Label appliziert werden. Die Daten werden sofort nach dem Emfpang (Dieser Codeteil wird nahezu zeitgleich in Master 2 und Slave 3 durchlaufen. Hier ist eine Synchronisation der Zeitbasen in Master 2 und Slave 3 möglich.) dekodiert und somit im eigenen Zwischenspeicher gespeichert. Jedes Steuergerät 2, 3 hat jetzt alle für die Initialisierung gültigen Signalwerte im Zwischenspeicher hinterlegt.
c) Aktualisieren (Update) der Signale der Initialisierungstask 30: Kopieren der Signalwerte vom Zwischenspeicher in den Schreib-Lese-Speicher.
d) Aufruf des Initialisierungsprozesses der Signale, die in der Initialisierung das PT1-Filter initialisieren.
e) Normaler Betrieb des Rechnersystems während des Fahrbetriebs der Brennkraftmaschine (DriveMode).

Führt der Master 2 im Fahrbetrieb einen Reset aus, durchläuft er die Initialisierung (vergleiche oben) und sendet das Datenpaket der Initialisierungstask 30 auf den CAN-Bus 4. Der Slave 3 empfängt das Datenpaket. Der zeitsynchrone Scheduleprozess startet keine Task, sondern sendet das Datenpaket auf dem CAN-Bus 4. Der Master 2 setzt seine Initialisierung nach der Auswertung dieses Datenpakets fort, vergleiche oben Punkt c).

Führt der Slave 3 im Fahrbetrieb einen Reset aus, durchläuft er die Initialisierung (vergleiche oben) und sendet das Datenpaket der Initialisierungstask 30 auf den CAN-Bus 4. Der Master 2 empfängt das Datenpaket. Im zeitsynchronen Master-Slave-Komponenten-Treiber-Start-Prozess erkennt er die Anforderung des Datenpakets vom Slave 3 und sendet nicht die Daten der momentanen Task, sondern die Daten der Initialisierungstask 30. Der Slave 3 setzt seine Initialisierung nach der Auswertung dieses Datenpakets fort, vergleiche oben Punkt c).

Anhand Figur 5 soll die Botschafts- und Signalspeicherung in dem erfindungsgemäßen Rechnersystem verdeutlicht werden. In dem Master-Steuergerät 2 werden Sensorikdaten 13 von einer entsprechenden Hardware (Sensoren 50) geholt und in dem Zwischenspeicher (ShadowBuffer 51) zwischengespeichert. Zum Aktualisieren der in dem Master 2 in der darauffolgenden Zeitscheibe zur Berechnung benutzten Sensorikdaten 13 auf den aktuellen Stand, werden die aktuellen Sensorikdaten 13 aus dem Zwischenspeicher 51 in einen Schreib-Lese-Speicher (RAM Mirror 52) kopiert (Schritt 53). Aus diesem werden sie dann bei Bedarf von den auf dem Master 2 ablaufenden Computerprogrammen 54 ausgelesen und für Berechnungen herangezogen (Schritt 55). Die aktuellen Sensorikdaten 13 werden außerdem aus dem Zwischenspeicher 51 ausgelesen und in einem Nachrichten-Speicher (Message Buffer 56) zwischengespeichert (Schritt 57). Von dort werden sie dann über einen Dual-Port RAM 58 und den Datenbus 4 an das Slave-Steuergerät 3 übertragen.

In dem Slave 3 werden die aktuellen Sensorikdaten 13 des Masters 2 über einen Dual-Port RAM 59 in einem Nachrichten-Speicher (Message Buffer 60) zwischengespeichert. Von dort werden die Sensorikdaten 13 dann in einem Schritt 61 in einen Zwischenspeicher (ShadowBuffer 62) übertragen. Zum Aktualisieren der in dem Slave 3 in der darauffolgenden Zeitscheibe zur Berechnung benutzten Sensorikdaten 13 auf den aktuellen Stand, werden die von dem Master 2 empfangenen, aktuellen Sensorikdaten 13 aus dem Zwischenspeicher 62 in einen Schreib-Lese-Speicher (RAM Mirror 63) kopiert (Schritt 64). Aus diesem werden sie dann bei Bedarf von den auf dem Slave 3 ablaufenden Computerprogrammen 65 ausgelesen und für Berechnungen herangezogen (Schritt 66).

Außerdem werden in dem Slave-Steuergerät 3 Sensorikdaten 13 von einer entsprechenden Hardware (Sensoren 67) geholt und in dem Zwischenspeicher 62 zwischengespeichert. Zum Aktualisieren der in dem Slave 3 in der darauffolgenden Zeitscheibe zur Berechnung benutzten Sensorikdaten 13 auf den aktuellen Stand, werden die aktuellen Sensorikdaten 13 aus dem Zwischenspeicher 62 in den Schreib-Lese-Speicher 63 kopiert (Schritt 64). Aus diesem werden sie dann bei Bedarf von den auf dem Slave 3 ablaufenden Computerprogrammen 65 ausgelesen und für Berechnungen herangezogen (Schritt 66). Die aktuellen Sensorikdaten 13 werden außerdem aus dem Zwischenspeicher 62 ausgelesen und in dem Nachrichten-Speicher 60 zwischengespeichert (Schritt 68). Von dort werden sie dann über den Dual-Port RAM 59 und den Datenbus 4 an das Master-Steuergerät 2 übertragen.

In dem Master 2 werden die aktuellen Sensorikdaten 13 des Slaves 3 über den Dual-Port RAM 58 in dem Nachrichten-Speicher 56 zwischengespeichert. Von dort werden die Sensorikdaten 13 dann in einem Schritt 69 in den Zwischenspeicher 51 übertragen. Zum Aktualisieren der in dem Master 2 in der darauffolgenden Zeitscheibe zur Berechnung benutzten Sensorikdaten 13 auf den aktuellen Stand, werden die von dem Slave 3 empfangenen, aktuellen Sensorikdaten 13 aus dem Zwischenspeicher 51 in den Schreib-Lese-Speicher 52 kopiert (Schritt 53). Aus diesem werden sie dann bei Bedarf von den auf dem Master 2 ablaufenden Computerprogrammen 54 ausgelesen und für Berechnungen herangezogen (Schritt 55).

Während in den Zwischenspeichern 51, 62 die Sensorikdaten 13 der aktuellen Zeitscheibe (verarbeitet zum Zeitpunkt n) abgelegt sind, erfolgt die eigentliche Abarbeitung der Computerprogramme 54, 65 anhand der Sensorikdaten 13 der vorangegangenen Zeitscheibe (verarbeitet zum Zeitpunkt n-1). Die Computerprogramme 54, 65 senden aus der Anwendungssoftware-Schicht 7 heraus Anforderungen 70, 71 nach neuen Werten für die Sensorikdaten 13 an die Hardwaretreiber-Schicht 6. Die oben beschriebenen Abläufe mit den Schritten 50 bis 69 geschehen unbemerkt für die Anwendungssoftware-Schicht 7. Diese registriert nur, dass ihr in den Schritten 55 und 66 neue Werte für die Sensorikdaten 13 übermittelt werden. Woher die Daten genau kommen und ob es sich um aktuelle Daten oder um Daten der vorangegangenen Zeitscheibe handelt ist der Anwendungssoftware-Schicht 7 gleichgültig.

Um einen korrekten Datenaustausch zwischen Master 2 und Slave 3 zu gewährleisten, werden drei verschiedene Signal-/ Botschafts-Zwischenspeicher benötigt (vergleiche Figur 5):
- MS-MessageBuffer 56, 60:: zur Zwischenspeicherung kompletter CAN Botschaften
- ShadowBuffer 51, 62:: zur Zwischenspeicherung einzelner Signale, bis alle Signale einer 20 ms/ 100 ms Zeitscheibe ausgetauscht sind. Der Zugriff auf den ShadowBuffer erfolgt ausschließlich über die Master Slave Treiber im Rahmen des Botschaftsempfangs, Botschaftsversendens und zum Aktualisieren des RAM Mirrors.
- RAM Mirror 52, 63:: enthält alle Signale, die für die aktuellen Berechnungen gebraucht werden.
Signalzugriffe erfolgen auf diesen Puffer anstatt auf die Hardware (zum Beispiel A/D-Wandler).

Um bereits beim Hochlauf der Steuergeräte 2, 3 die Datenkonsistenz zu gewährleisten, wurde eine spezielle Strategie entwickelt, die vor dem eigentlichen Start des Rechnerprogramms ausgewählte Daten abgleicht. Vorteilhaft ist dabei, dass ein ganz spezieller Zeitpunkt in dem Computerprogramm des Masters 2 und des Slaves 3 zeitgleich (im 100 er Mikrosekundenbereich) abgearbeitet wird. Dies erlaubt eine Justage der Zeitbasen der einzelnen Steuergeräte 2, 3. Damit können zum Beispiel Glühkerzensteuersignale in dem Master 2 und dem Slave 3 präzise gegeneinander versetzt werden, um Spannungseinbrüche der Batteriespannung zu minimieren.

Neben den Sensorikdaten können auch beliebige Daten aus der Anwendersoftware in diesen Signalaustausch als sogenannte UserSignals einbezogen werden. Diese Signale werden jedoch nicht zwischengespeichert, um deren Aktualität nicht unnötig zu verschlechtern. Abhängig von der Wahl des Übertragungszeitpunktes können auch diese Signale identisch in Master- und Slavezeitscheibe verwendet werden.

Ein Verschieben von Sensoren oder Aktoren an das andere Steuergerät lässt sich mit relativ wenig Konfigurationsänderungsaufwand erledigen, da alle Aktorikwerte in beiden Steuergeräten 2, 3 berechnet werden und die Endstufenfehler gekoppelt sind.

Auf das Sicherheitskonzept des Master-Slave-Systems soll an dieser Stelle nicht weiter eingegangen werden. Es folgt lediglich eine beispielhafte Auflistung einiger Eckpunkte:
- CAN-Bus Hardwareüberwachung;
- CAN-Bus Datenüberwachung auf Empfang und Versenden;
- CAN-Bus Datenüberwachung durch Checksumme über komplettes Datenpaket;
- Überwachung der korrekten Zeitscheibenabfolge in jedem Steuergerät 2, 3;
- Überwachung der korrekten Zeitscheibenabfolge des Slave 3 durch den Master 2; und
- Erkennung eines Steuergeräteresets während des Betriebs durch das andere Steuergerät.

Beide Steuergeräte 2, 3 arbeiten das gleiche Computerprogramm synchron mit einem einstellbaren Zeitversatz ab und haben Zugriff auf die gleichen Sensorikdaten 13. Unter diesen Gesichtspunkten handelt es sich also eigentlich um ein Master-Master-Konzept.

In Figur 6 ist ein Systembild eines weiteren Ausführungsbeispiels des erfindungsgemäßen Rechnersystems mit der eingesetzten Sensorik und Aktorik dargestellt. Gegenüber dem Ausführungsbeispiel aus Figur 3 fehlt bei dem hier dargestellten Ausführungsbeispiel beim Master 2 ein Sensor 13.7 zum Erfassen der Öltemperatur, ein Sensor 13.9 zum Erfassen der Abgastemperatur, sowie ein Sensor 13.16 für die Glühstift Rückmeldung, ein Crashsensor 13.17, ein Tankleerschalter 13.18, ein Schalter 13.19 zum Melden des Status (offen, geschlossen) des Tankdeckels, ein Schalter 13.20 zum Melden einer Anforderung zum Zuheizen, ein Sensor 13.21 für das Zuheizer-Verbrauchssignal, ein Sensor 13.22 für die Heizungsanforderung, ein Raps-Methyl-Sensor 13.23, ein Sensor 13.24 für den Differenzdruck in dem Partikelfilter, und eine Lambdasonde 13.25. Zusätzlich ist bei dem Ausführungsbeispiel aus Figur 6 ein Schalter 13.28 für eine MIL-Anforderung und ein Schalter 13.29 für den Status eines Glühzeitrelais vorgesehen. Beim Slave 3 fehlt ein Sensor 14.9 für die Abgastemperatur, sowie ein Sensor 14.16 für die Glühstift Rückmeldung, ein Sensor 14.24 für den Differenzdruck in dem Partikelfilter und eine Lambdasonde 14.25.

Die Aktoren, die von dem Master 2 über Leistungsendstufen 11 angesteuert werden, umfassen nicht ein Tankabschaltventil 16.2, eine Startersteuerung 16.3, eine Generatorabschaltung 16.4, eine Klimaanlagenanforderung 16.5, eine Kühlerthermostatsteuerung 16.7, eine Lüftersteuerung 16.10, eine elektrische Kühlwasserpumpe 16.12, eine Katalysator-Heizung 16.13, eine Additiv-Dosierpumpe 16.14, ein Zusatzrelais 16.15, eine Zuheizer-Brennersteuerung 16.16, eine Abgasrückführkühlung 16.19 und ein Glühstiftkerzen-Steuergerät 16.21. Statt dessen sind Aktoren für ein Kühlerlüfter-Bypass/Absperrrelais 16.22, eine Nachlaufpumpe 16.23, einen Kühlerlüfter Ladeluft 16.24, einen hydraulischen Kühlerlüfter 16.25, eine Kühlerthermostat-Heizung 16.26 und eine Klimaabschaltung 16.27 vorgesehen. Die Aktoren, die von dem Slave 3 angesteuert werden, umfassen nicht ein Glührelais 17.11, eine Katalysator-Heizung 17.13, eine Abgasrückführkühlung 17.19 und ein Glühstiftkerzen-Steuergerät 17.21. Die über den Datenbus 4 zwischen dem Master 2 und dem Slave 3 übertragen Daten (Bezugszeichen 21) betreffen insbesondere die Menge bzw. den Schubstatus, einen Zylinderzähler, einen Ansteuerstatus sowie Eingangsgrößen für ARF und LDR.

Die Funktionen 9 des Masters 2 umfassen keine Abgasnachbehandlung und statt eines Startmoments wird eine Startmenge berücksichtigt. Die Funktionen 9 des Slaves 3 betreffen nicht das Startmoment, die Leerlaufregelung, die Momentenregelung und -begrenzung, den externen Momenteneingriff, den Laufruheregler, den aktiven Ruckeldämpfer, die Abgasnachbehandlung, die Ansteuerung der Kraftstoffkühlung, FGR (GRA), die Motorlagersteuerung, die Klimakompressoransteuerung, die Glühzeitsteuerung und die Wegfahrsperre.

Obwohl sich der Funktionsumfang von Master 2 und Slave 3 bei dem in Figur 6 dargestellten Ausführungsbeispiel relativ stark unterscheidet, arbeiten in beiden Steuergeräten 2, 3 doch die gleichen Computerprogramme, wobei in dem Slave 3 nicht alle von den Computerprogrammen berechneten Werte zur Ansteuerung von Aktoren 17 beziehungsweise zur Erfüllung der Steuerungs- und/oder Regelungsfunktion herangezogen werden. Das ändert jedoch nichts daran, dass auch bei dem Rechensystem aus Figur 6 die gleichen Computerprogramme in Master 2 und Slave 3 zeitsynchron mit einem einstellbaren Zeitversatz ausgeführt werden, und dass an Master 2 und Slave 3 die gleichen Sensorikdaten zur Verfügung stehen.

Die Fehlerspeicherung der Sensoren 13, 14 und Aktoren 16,17 erfolgt separat in dem Master 2 und in dem Slave 3. Die gespeicherten Informationen betreffend das Auftreten eines Fehlers können zwischen Master 2 und Slave 3 ausgetauscht beziehungsweise abgeglichen werden. Informationen über die Umstände des Fehlers (zum Beispiel wann, was, wo?) verbleiben jedoch in den Fehlerspeichern und werden nicht abgeglichen. Um die Fehlerspeicher über die Diagnoseschnittstellen 19.1, 20.1 zu Wartungszwecken auslesen zu können, müssen die Fehlerspeicher mit unterschiedlichen Adressen (sogenannten Reizadressen) ansprechbar sein. Dies ist erforderlich, da die Software des Masters 2 und des Slaves 3 ansonsten identisch ist. Das Auslesen der Fehlerspeicher über die Diagnoseschnittstellen 19.1, 20.1 kann beispielsweise über einen CAN-Bus (KWP2000) oder über eine serielle Schnittstelle (K-Line) erfolgen.

In dem in den Figuren beispielhaft beschriebenen Master Slave Systemen sind zwei Steuergeräte 2, 3 über einen CAN-Bus 4 miteinander verbunden. Die Sensoren 13, 14 sind zum Teil nur an einem Steuergerät 2, 3 angeschlossen. Die Sensorikdaten müssen somit unter Einhaltung der Datenkonsistenz innerhalb der zeitsynchronen Tasks von einem Steuergerät 2; 3 zum anderen Steuergerät 3; 2 übertragen werden.

Das Daten-Multiplex der CAN-Botschaften geschieht mittels Data-Identifiern (Data-IDs). Die Botschaften zum Abgleich der Sensorik 13 im Master Slave System haben den folgenden Aufbau:

| | | | | | | | | |
|---|---|---|---|---|---|---|---|---|
| CAN ID | DataID | Daten | Daten | Daten | Daten | Daten | Daten | Daten |

Die zeitsynchrone Botschaftsübertragung erfolgt bei den vorliegenden Ausführungsbeispielen in einem 10 ms Raster. Dabei wird immer ein Block an CAN-Botschaften zwischen den Steuergeräten 2, 3 ausgetauscht. Das Blockende und somit das Ende der Datenübertragung wird über einen definierten CAN Identifier erkannt. Dieser CAN Identifier wird exklusiv als letzte Botschaft im CAN Übertragungsblock verschickt. Die letzte CAN Botschaft ist wie folgt aufgebaut:

| | | | | | | | | |
|---|---|---|---|---|---|---|---|---|
| Spezielle CAN ID | DataID | CS | Task Counter | Daten | Daten | Daten | Daten | Daten |

- DataID:: Multiplexinformationen
- CS:: Checksumme aller Botschaftsbytes eines Übertragungsblocks
- TaskCounter:: Schedulinginformation/ Zeitscheibenzähler

Ein Beispiel für einen CAN Übertragungsblock:

| | | | |
|---|---|---|---|
| Sendereihenfolge | CAN ID | Botschaftsinhalt | Multiplex zwischen den 10 ms Tasks |
| 1 | 401 | Daten | Ja |
| 2 | 402 | Daten | Ja |
| 3 | 403 | Daten | Ja |
| Letzte | 404 | CS, TaskCounter, Daten | Ja |

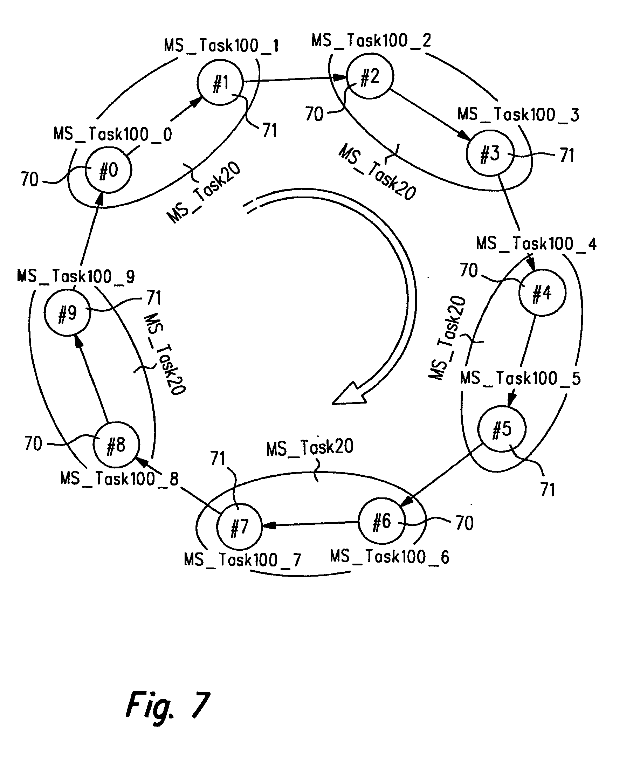

Bei den oben beschriebenen Ausführungsbeispielen werden die 20 ms Tasks (MS_Task20) und die 100 ms Tasks (MS_Task100_0 bis MS_Task100_9) in beiden Steuergeräten 2, 3 in 10 ms Teile (Zeitschlitze oder Slots 70, 71) unterteilt und im 10 ms Zeitraster gescheduled. Das heißt, nach 20 ms sind alle Teile der 20 ms Task und nach 100 ms alle Teile der 100 ms Task ausgeführt (vergleiche die Aufteilung und Abarbeitung der Zeitscheiben in Figur 7). Das Master-Steuergerät 2 sendet alle 10 ms CAN-Botschaften, um die gemessenen Sensorikdaten 13 des Master-Steuergeräts 2 an das Slave-Steuergerät 3 zu transportieren. In dieser CAN-Übertragung wird auch die Information, welche Zeitscheibe im Master 2 aktuell ausgeführt wird, in Form eines Zählers (TaskCounter) mitgesendet. Diese mitgesendete Nummer der aktuellen Zeitscheibe ist innerhalb der 100 ms Tasks (MS_Task100_0 bis MS_Task100_9) angegeben (#i, i = 0 bis 9). Das Slave-Steuergerät 3 synchronisiert den Start seiner 10 ms Task mittels des in Figur 4 dargestellten Zustandsautomaten. Das Slave-Steuergerät 3 überträgt den Zähler für die aktuelle 10 ms Zeitscheibe an das Master-Steuergerät 2. Auf diese Weise kann der Master die Abfolge der Zeitscheiben im Slave 3 überwachen.

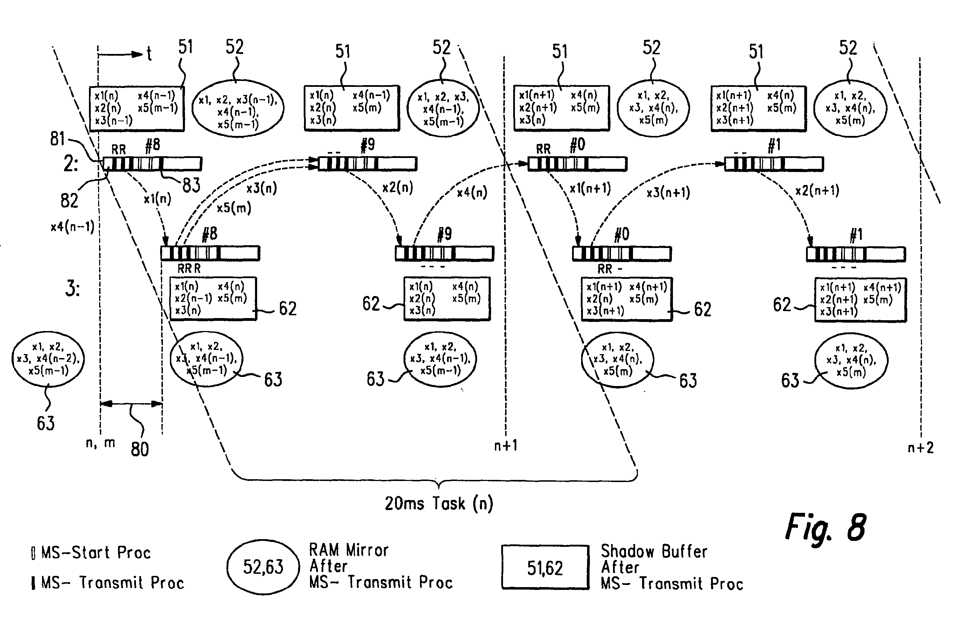

Anhand der Figur 8 wird der Datenaustausch in dem Master Slave System näher erläutert. In den Computerprogrammen des Masters 2 und des Slaves 3 werden als Eingangssignale die Sensorikdaten x1 bis x5 verarbeitet, wobei die Sensorikdaten x1 und x2 unmittelbar an dem Master 2 und die Sensorikdaten x3 bis x5 unmittelbar an dem Slave 3 anliegen. Mit n ist die Zeitbasis der 20 ms Task bezeichnet, mit m die Zeitbasis der 100 ms Task. Die Sensorikdaten x1 bis x4 werden in der 20 ms Task verarbeitet, wohingegen die Sensorikdaten x5 in der 100 ms Task verarbeitet werden. Das Bezugszeichen R in Figur 8 bedeutet, dass ein Daten-Aktualisierungs-Anfrage-Bit (DataUpdateRequest bit) gesetzt ist. In der oberen Hälfte der Figur 8 ist der Master 2 und in der unteren Hälfte der Slave 3 dargestellt.

In einer Zeitscheibe n werden Daten zunächst in einem 10 ms Zeitschlitz #8 (Bezugszeichen 81) und dann in einem 10 ms Zeitschlitz #9 verarbeitet. Zu Beginn eines Zeitschlitz 81 wird eine Master-Slave-Start-Prozedur 82 abgearbeitet, sowie eine Master-Slave-Transmit-Prozedur 83 zur Datenübertragung.

In dem Zeitschlitz #8 enthält der Zwischenspeicher 51 des Masters 2 die Sensorikdaten x1(n) und x2(n) der aktuellen 20 ms Zeitscheibe n. Außerdem enthält er die Sensorikdaten x3(n-1) und x4(n-1) der vorangegangenen 20 ms Zeitscheibe n-1. Die Sensorikdaten x4(n-1) wurden in der vorangegangenen Zeitscheibe n-1 von dem Slave 3 an den Master 2 übermittelt und dort in dem Zwischenspeicher 51 abgelegt. Schließlich enthält der Zwischenspeicher 51 auch die Sensorikdaten x5(m-1) der vorangegangenen 100 ms Zeitscheibe m-1. Des weiteren enthält in dem Zeitschlitz #8 der Schreib-Lese-Speicher 51 des Masters 2 die Sensorikdaten x1(n-1), x2(n-1), x3(n-1), x4(n-1) der vorangegangenen 20 ms Zeitscheibe n-1 sowie die Sensorikdaten x5(m-1) der vorangegangenen 100 ms Zeitscheibe m-1.

Die Computerprogramme in dem Slave 3 werden in Zeitscheiben zeitsynchron mit einem einstellbaren Zeitversatz 80 relativ zu dem Master 2 abgearbeitet. Der Zwischenspeicher 62 des Slaves 3 enthält in der um den Zeitversatz 80 verzögerten Zeitscheibe n die Sensorikdaten x1(n), x3(n) und x4(n), wobei die Daten x3(n) und x4(n) unmittelbar an dem Slave 3 anliegen. Die Sensorikdaten x1(n) wurden während des Zeitversatzes 80 in einer CAN-Botschaft von dem Master 2 an den Slave 3 übertragen und dort in dem Zwischenspeicher 62 abgelegt. Außerdem enthält der Zwischenspeicher 62 die Sensorikdaten x2(n-1) der vorangegangenen 20 ms Zeitscheibe n-1 sowie die Sensorikdaten x5(m) der aktuellen 100 ms Zeitscheibe m. In dem Schreib-Lese-Speicher 63 sind noch die Werte x1(n-1), x2(n-1), x3(n-1), x4(n-1) und x5(m-1) der vorangegangenen Zeitscheiben n-1, m-1 abgelegt. Die aktuellen Sensorikdaten x3(n) und x5(m), die der Slave 3 soeben von den Sensoren 13 eingelesenen hat, werden von dem Slave 3 an den Master 2 übermittelt und dort in dem Zwischenspeicher 51 abgelegt.

In dem Zeitschlitz #9 werden die aktuellen Sensorikdaten x2(n), die der Master 2 soeben von den Sensoren 13 eingelesen hat, in einer CAN-Botschaft an den Slave 3 übertragen. Ebenso werden die aktuellen Sensorikdaten x4(n), die der Salve 3 soeben von den Sensoren 13 eingelesen hat, in einer CAN-Botschaft an den Master 2 übertragen. Somit stehen in beiden Steuergeräten 2, 3 sämtliche aktuellen Sensorikdaten x1(n) bis x4(n) und x5(m) zur Verfügung. In der darauffolgenden Zeitscheibe n+1 werden die aktuellen Sensorikdaten in die Schreib-Lese-Speicher 52, 63 des Master 2 und des Slave 3 übertragen, wo sie für die Abarbeitung der Computerprogramme zur Verfügung stehen.

Außerdem werden in der Zeitscheibe n+1 wieder aktuelle Sensorikdaten x1(n+1), x2(n+2) von dem Master 2 und aktuelle Sensorikdaten x3(n+1), x4(n+1) von dem Slave 3 unmittelbar von Sensoren 13 eingelesen und in den Zeitschlitzen #0 und #1 über den CAN-Datenbus 4 an das jeweils andere Steuergerät 3; 2 übertragen, so dass zum nachfolgenden Zeitschlitz n+2 die aktuellen Sensorikdaten x1(n+1) bis x4(n+1) sowie x5(m) für die Abarbeitung der Computerprogramme zur Verfügung stehen. Die Sensorikdaten x5 werden nur in jeder fünften Zeitscheibe von dem Slave 3 eingelesen, also das nächste Mal wieder in der Zeitscheibe n+5.

## Patentansprüche

1. Verfahren zum Betreiben von mindestens zwei miteinander verbundenen Steuergeräten (2, 3), wobei die Steuergeräte (2, 3) auf Sensorikdaten (x1, ... x5) zugreifen und jeweils mindestens ein Computerprogramm zur Steuerung von Betriebsabläufen, insbesondere in einem Fahrzeug, abarbeiten und die Steuergeräte (2, 3) Synchronisationsinformationen austauschen, **dadurch gekennzeichnet, dass** die Steuergeräte (2, 3) das gleiche Computerprogramm zeitsynchron mit einem einstellbaren Zeitversatz (80) abarbeiten.

2. Verfahren nach Anspruch 1, **dadurch gekennzeichnet, dass** in den Steuergeräten (2, 3) die selben Sensorikdaten (x1, ... x5) zur Verfügung stehen.

3. Verfahren nach Anspruch 1 oder 2, **dadurch gekennzeichnet, dass** die Steuergeräte (2, 3) jeweils nur einen Teil aller Sensorikdaten (x1, ... x5) von Sensoren (13, 14) erhalten und die Steuergeräte (2, 3) Sensorikdaten (x1, ... x5) austauschen, so dass in jedem Steuergerät (2, 3) alle Sensorikdaten (x1, ... x5) zur Verfügung stehen.

4. Verfahren nach einem der Ansprüche 1 bis 3, **dadurch gekennzeichnet, dass** in den einzelnen Steuergeräten (2, 3) mit der zeitsynchronen Abarbeitung der Computerprogramme unter Zugriff auf die Sensorikdaten (x1, ... x5) so lange gewartet wird, bis in jedem Steuergerät (2, 3) alle aktuellen Sensorikdaten (x1, ... x5) zur Verfügung stehen.

5. Verfahren nach einem der Ansprüche 1 bis 4, **dadurch gekennzeichnet, dass** der Zeitversatz (80) in Abhängigkeit von der für den Austausch der Sensorikdaten (x1, ... x5) zwischen den Steuergeräten (2, 3) benötigten Zeitdauer eingestellt wird.

6. Verfahren nach einem der Ansprüche 1 bis 5, **dadurch gekennzeichnet, dass** der Zeitversatz (80) während des Betriebs der Steuergeräte (2, 3) eingestellt wird.

7. Verfahren nach Anspruch 5 oder 6, **dadurch gekennzeichnet, dass** der Zeitversatz (80) in Abhängigkeit von der für den Austausch der Sensorikdaten (x1, ... x5) zwischen den Steuergeräten (2, 3) benötigten Zeitdauer geregelt wird.

8. Verfahren nach einem der Ansprüche 5 bis 7, **dadurch gekennzeichnet, dass** der Zeitversatz (80) in Abhängigkeit von der für den Austausch der Sensorikdaten (x1, ... x5) zwischen den Steuergeräten (2, 3) benötigten Zeitdauer gedämpft eingestellt bzw. geregelt wird.

9. Verfahren nach einem der vorangegangenen Ansprüche, **dadurch gekennzeichnet, dass** die Synchronisation der Steuergeräte (2, 3) allein durch den Austausch von Nutzdaten über die Datenübertragungsmittel (4) ohne die Übertragung gesonderter Synchronisationsinformationen ausgeführt wird.

10. Rechnersystem umfassend mindestens zwei miteinander verbundene Steuergeräte (2, 3) und ein die Steuergeräte (2, 3) verbindendes Datenübertragungsmedium (4) zum Austausch von Synchronisationsinformationen zwischen den Steuergeräten (2, 3), wobei die Steuergeräte (2, 3) auf Sensorikdaten (x1, ... x5) zugreifen und jeweils mindestens ein Computerprogramm zur Steuerung von Betriebsabläufen, insbesondere in einem Fahrzeug, abarbeiten, **dadurch gekennzeichnet, dass** die Steuergeräte (2, 3) das gleiche Computerprogramm zeitsynchron mit einem durch Einstellmittel einstellbaren Zeitversatz (80) abarbeiten.

11. Rechnersystem nach Anspruch 9, **dadurch gekennzeichnet, dass** eines der Steuergeräte als Master-Steuergerät (2) und die übrigen Steuergeräte als Slave-Steuergeräte (3) definiert sind, wobei das Master-Steuergerät (2) Synchronisationsinformationen an die Slave-Steuergeräte (3) übermittelt.

12. Rechnersystem nach Anspruch 10, **dadurch gekennzeichnet, dass** sich die Slave-Steuergeräte (3) nach dem Hochfahren des Rechnersystems automatisch auf die Zeitbasis des Master-Steuergeräts (2) aufsynchronisieren.

13. Rechnersystem nach einem der Ansprüche 9 bis 11, **dadurch gekennzeichnet, dass** an die Steuergeräte (2, 3) jeweils nur ein Teil der Sensoren (13, 14) angeschlossen ist, die Steuergeräte (2, 3) jeweils nur einen Teil aller Sensorikdaten (x1, ... x5) erhalten und die Steuergeräte (2, 3) über das Datenübertragungsmedium (4) Sensorikdaten (x1, ... x5) austauschen, so dass in jedem Steuergerät (2, 3) alle Sensorikdaten (x1, ... x5) zur Verfügung stehen.

14. Rechnersystem nach einem der Ansprüche 9 bis 12, **dadurch gekennzeichnet, dass** in den einzelnen Steuergeräten (2, 3) Mittel vorgesehen sind, um mit der zeitsynchronen Abarbeitung der Computerprogramme unter Zugriff auf die Sensorikdaten (x1, ... x5) so lange zu warten, bis in jedem Steuergerät (2, 3) alle aktuellen Sensorikdaten (x1, ... x5) zur Verfügung stehen.

15. Rechnersystem nach einem der Ansprüche 9 bis 13, **dadurch gekennzeichnet, dass** jedes Steuergerät (2, 3) unterteilt ist in eine Hardware-Ebene (5), eine Hardwaretreiber-Ebene (6) und eine Anwendungssoftware-Ebene (7), wobei das Computerprogramm zur Steuerung von Betriebsabläufen in der Anwendungssoftware-Ebene (7) abläuft und die Übertragung der Sensorikdaten (x1, ... x5) unabhängig von der Anwendungssoftware-Ebene (7) in der Hardwaretreiber-Ebene (6) abläuft.

16. Rechnersystem nach einem der Ansprüche 12 bis 14, **dadurch gekennzeichnet, dass** die Sensoren (13, 14) den Steuergeräten (2, 3) derart zugeordnet und an den ihnen jeweils zugeordneten Steuergeräten (2, 3) angeschlossen sind, dass sich während des Betriebs des Rechnersystems auf dem Datenübertragungsmedium (4) in beide Übertragungsrichtungen eine im zeitlichen Mittel im wesentlichen gleichmäßige Auslastung ergibt.

17. Rechnersystem nach einem der Ansprüche 9 bis 15, **dadurch gekennzeichnet, dass** die Datenübertragung über das Datenübertragungsmedium (4) nach dem CAN (Controller Area Network)-Protokoll erfolgt.

## Claims

1. Method for operating at least two interconnected control devices (2, 3), the control devices (2, 3) accessing sensor system data (x1, ... x5) and each running at least one computer program for controlling operational sequences, in particular in a vehicle, and the control devices (2, 3) exchanging synchronization information, **characterized in that** the control devices (2, 3) run the same computer program in synchronism and with an adjustable time offset (80).

2. Method according to Claim 1, **characterized in that** the same sensor system data (x1, ... x5) is available in the control devices (2, 3).

3. Method according to Claim 1 or 2, **characterized in that** the control devices (2, 3) each receive only some of all the sensor system data (x1, ... x5) from sensors (13, 14), and the control devices (2, 3) exchange sensor system data (x1, ... x5) so that all the sensor system data (x1, ... x5) is available in each control device (2, 3).

4. Method according to one of Claims 1 to 3, **characterized in that** the individual control devices (2, 3) delay the synchronous running of the computer programs by accessing the sensor system data (x1, ... x5) until all the current sensor system data (x1, ... x5) is available in each control device (2, 3).

5. Method according to one of Claims 1 to 4, **characterized in that** the time offset (80) is set as a function of the time period required to exchange the sensor system data (x1, ... x5) between the control devices (2, 3).

6. Method according to one of Claims 1 to 5, **characterized in that** the time offset (80) is set while the control devices (2, 3) are operating.

7. Method according to Claim 5 or 6, **characterized in that** the time offset (80) is regulated as a function of the time period required to exchange the sensor system data (x1, ... x5) between the control devices (2, 3).

8. Method according to one of Claims 5 to 7, **characterized in that** the time offset (80) is set or regulated in a damped fashion as a function of the time period required to exchange the sensor system data (x1, ... x5) between the control devices (2, 3).

9. Method according to one of the preceding claims, **characterized in that** the control devices (2, 3) are synchronized solely by the exchange of useful data via the data transmission means (4) without separate synchronization information being transmitted.

10. Computer system comprising at least two interconnected control devices (2, 3) and a data transmission medium (4) which connects the control devices (2, 3) for the exchange of synchronization information between the control devices (2, 3), the control devices (2, 3) accessing sensor system data (x1, ... x5) and each running at least one computer program for controlling operational sequences, in particular in a vehicle, **characterized in that** the control devices (2, 3) run the same computer program in synchronism with a time offset (80) which can be set by setting means.

11. Computer system according to Claim 9, **characterized in that** one of the control devices is defined as a master control device (2) and the other control devices are defined as slave control devices (3), the master control device (2) transferring synchronization information to the slave control devices (3).

12. Computer system according to Claim 10, **characterized in that** the slave control devices (3) synchronize themselves automatically to the time base of the master control device (2) after the computer system is powered up.

13. Computer system according to one of Claims 9 to 11, **characterized in that** in each case only some of the sensors (13, 14) are connected to the control devices (2, 3), the control devices (2, 3) each receive only some of all the sensor system data (x1, ... x5), and the control devices (2, 3) exchange sensor system data (x1, ... x5) via the data transmission medium (4) so that all the sensor system data (x1, ... x5) is available in each control device (2, 3).

14. Computer system according to one of Claims 9 to 12, **characterized in that** in the individual control devices (2, 3) means are provided in order to delay the synchronous running of the computer programs by accessing the sensor system data (x1, ... x5) until all the current sensor system data (x1, ... x5) is available in each control device (2, 3).

15. Computer system according to one of Claims 9 to 13, **characterized in that** each control device (2, 3) is divided into a hardware level (5), a hardware driver level (6) and an application software level (7), the computer program for controlling operational sequences running in the application software level (7) and the sensor system data (x1, ... x5) being transmitted in the hardware driver level (6), independently of the application software level (7).

16. Computer system according to one of Claims 12 to 14, **characterized in that** the sensors (13, 14) are assigned to the control devices (2, 3) and are connected to the control devices (2, 3) assigned to them in such a way that essentially uniform capacity utilization when averaged over time comes about on the data transmission medium (4) in both transmission directions during the operation of the computer system.

17. Computer system according to one of Claims 9 to 15, **characterized in that** data is transmitted via the data transmission medium (4) according to the CAN (Controller Area Network) protocol.

## Revendications

1. Procédé pour faire fonctionner au moins deux appareils de commande (2, 3) interconnectés, les appareils de commande (2, 3) utilisant des données de capteur (x1, ..., x5) et exécutant chacun au moins un programme informatique pour commander des séquences de fonctionnement, en particulier dans un véhicule, et les appareils de commande (2, 3) échangeant des informations de synchronisation,
**caractérisé en ce que**
les appareils de commande (2, 3) exécutent le même programme informatique de manière synchronisée dans le temps avec un décalage de temps (80) réglable.

2. Procédé selon la revendication 1,
**caractérisé en ce que**
les mêmes données de capteur (x1, ..., x5) sont disponibles dans les appareils de commande (2, 3).

3. Procédé selon la revendication 1 ou 2,
**caractérisé en ce que**
les appareils de commande (2, 3) ne reçoivent chacun qu'une partie de toutes les données de capteur (x1, ..., x5) des capteurs (13, 14) et les appareils de commande (2, 3) échangent des données de capteur (x1, ..., x5) de sorte que, dans chaque appareil de commande (2, 3), toutes les données de capteur (x1, ..., x5) sont disponibles.

4. Procédé selon l'une des revendications 1 à 3,
**caractérisé en ce que**
dans les différents appareils de commande (2, 3), on attend l'exécution synchronisée dans le temps des programmes informatiques en accédant aux données de capteur (x1, ..., x5) jusqu'à ce que toutes les données de capteur (x1, ..., x5) effectives soient disponibles dans chaque appareil de commande (2, 3).

5. Procédé selon l'une des revendications 1 à 4,
**caractérisé en ce que**
le décalage de temps (80) est réglé en fonction de la durée de temps nécessaire pour l'échange des données de capteur (x1, ..., x5) entre les appareils de commande (2, 3).

6. Procédé selon l'une des revendications 1 à 5,
**caractérisé en ce que**
le décalage de temps (80) est réglé lors du fonctionnement des appareils de commande (2, 3).

7. Procédé selon la revendication 5,
**caractérisé en ce que**
le décalage de temps (80) est régulé en fonction de la durée de temps nécessaire pour l'échange des données de capteur (x1, ..., x5) entre les appareils de commande (2, 3).

8. Procédé selon l'une des revendications 5 à 7,
**caractérisé en ce que**
le décalage de temps (80) est réglé ou régulé de façon amortie en fonction de la durée de temps nécessaire pour l'échange des données de capteur (x1, ..., x5) entre les appareils de commande (2, 3).

9. Procédé selon l'une des revendications précédentes,
**caractérisé en ce que**
la synchronisation des appareils de commande (2, 3) est réalisée par le seul échange de données utiles via les moyens de transmission de données (4) sans transmission d'informations de synchronisation particulières.

10. Système informatique comprenant au moins deux appareils de commande (2, 3) interconnectés et un moyen de transmission de données (4) reliant les appareils de commande (2, 3) pour échanger des informations de synchronisation entre les appareils de commande (2, 3), les appareils de commande (2, 3) utilisant des données de capteur (x1, ..., x5) et exécutant chacun au moins un programme informatique pour commander des séquences de fonctionnement en particulier dans un véhicule,
**caractérisé en ce que**
les appareils de commande (2, 3) exécutent le même programme informatique de façon synchronisée dans le temps avec un décalage de temps (80) réglable par un moyen de réglage.

11. Système informatique selon la revendication 9,
**caractérisé en ce qu'**
l'un des appareils de commande est défini comme appareil de commande maître (2) et les autres appareils de commande comme appareils de commande esclaves (3), l'appareil de commande maître (2) transmettant des informations de synchronisation aux appareils de commande esclaves (3).

12. Système informatique selon la revendication 10,
**caractérisé en ce que**
les appareils de commande esclaves (3) se synchronisent automatiquement avec la base de temps de l'appareil de commande maître (2) après le lancement du système informatique.

13. Système informatique selon l'une des revendications 9 à 11,
**caractérisé en ce que**
respectivement une partie des capteurs (13, 14) seulement est reliée aux appareils de commande (2, 3), les appareils de commande (2, 3) ne reçoivent chacun qu'une partie de toutes les données de capteur (x1, ..., x5) et les appareils de commande (2, 3) échangent des données de capteur via le moyen de transmission de données (4), de sorte que toutes les données de capteur (x1, ..., x5) sont disponibles dans chaque appareil de commande (2, 3).

14. Système informatique selon l'une des revendications 9 à 12,
**caractérisé en ce que**
les différents appareils de commande (2, 3) comportent des moyens pour attendre l'exécution synchronisée dans le temps des programmes informatiques en accédant aux données de capteur (x1, ..., x5) jusqu'à ce que toutes les données de capteur (x1, ..., x5) effectives soient disponibles dans chaque appareil de commande (2, 3).

15. Système informatique selon l'une des revendications 9 à 13,
**caractérisé en ce que**
chaque appareil de commande (2, 3) est divisé en un niveau matériel (5), un niveau du moteur matériel (6) et un niveau de logiciel d'application (7), le programme informatique pour commander des séquences de fonctionnement se déroulant au niveau de logiciel d'application (7) et la transmission des données de capteur (x1, ..., x5) se déroulant au niveau du moteur matériel (6) indépendamment du niveau de logiciel d'application (7).

16. Système informatique selon l'une des revendications 12 à 14,
**caractérisé en ce que**
les capteurs (13, 14) sont affectés aux appareils de commande (2, 3) et reliés aux appareils de commande (2, 3) leur étant respectivement associés de telle sorte que pendant le fonctionnement du système informatique, on obtient sur le moyen de transmission de données (4) dans les deux directions de transmission une charge moyenne pour l'essentiel régulière en moyenne dans le temps.

17. Système informatique selon l'une des revendications 9 à 15,
**caractérisé en ce que**
la transmission de données via le moyen de transmission de données (4) s'effectue selon le protocole CAN (Controller Area Network).
